# EUROPEAN PATENT APPLICATION

(11) **EP 2 993 038 A1**
(43) Date of publication of application: **09.03.2016**
(21) Application number: 14791911.2
(22) Date of filing: 25.04.2014
(51) Int. Cl.: B32B 27/00, B32B 27/20, B32B 27/36, C08J 7/04, C08K 3/20, C08L 83/04, C09D 5/18, C09D 183/04, F21V 3/00

(54) **FLAME-RESISTANT COMPOSITE MEMBER**

(30) Priority: 01.05.2013 JP 2013096227; 22.04.2014 JP 2014088072
(71) Applicant: Nitto Denko Corporation, Ibaraki-shi, Osaka 567-8680 (JP)
(72) Inventor: SUGINO, Yusuke, Ibaraki-shi Osaka 567-8680 (JP); NAGASAKI, Kunio, Ibaraki-shi Osaka 567-8680 (JP); HIDA, Takafumi, Ibaraki-shi Osaka 567-8680 (JP); NAKAYAMA, Yusuke, Ibaraki-shi Osaka 567-8680 (JP)
(74) Representative: Müller-Boré & Partner Patentanwälte PartG mbB
(86) International application number: PCT/JP2014/061667
(87) International publication number: WO 2014/178339

(57) **Abstract**

Provided is a flame-retardant composite material showing extremely high flame retardancy despite including a combustible base material. The flame-retardant composite material of the present invention includes, on at least one surf ace of a plastic-based base material containing an inorganic compound, a coating film formed of a silicone resin composition (C) containing at least an inorganic oxide particle-containing condensation-reactive silicone resin.

## Description

### Technical Field

The present invention relates to a flame-retardant composite material, and more specifically, to a flame-retardant composite material including, on at least one surface of a specif ic base material, a coating film formed of a specific silicone resin composition. The present invention also relates to a lighting apparatus using the flame-retardant composite material.

### Background Art

A halogen-based flame retardant has heretofore been widely used as a flame-retarding agent for making a paint composition flame-retardant (see, for example, Patent Literature 1). However, in terms of environmental protection, the method cannot be said to be preferred because the method involves the problem of dioxin or chlorofluorocarbon produced from the halogen-based flame retardant. In addition, an inorganic flame retardant such as aluminum hydroxide has been used as a flame-retarding agent for making the paint composition flame-retardant. However, aluminum hydroxide involves a problem in that aluminum hydroxide reduces the physical properties, such as physical characteristics and water resistance, of a paint and a base material having applied thereto the paint.

A method involving coating the top of a plastic with an inorganic paint tomake the plastic flame-retardant is also available. However, it is difficult to coat the plastic with the inorganic paint so that the paint may have a large thickness because the paint has low flexibility and is hence liable to break. Therefore, the paint itself has flame retardancy, but in the case of a composite thereof with the plastic, heat by flame contact is transferred to the plastic to carbonize, or spread fire to, the plastic. In addition, in the case of a paint containing an organic binder, the organic binder carbonizes at the time of flame contact. Therefore, it is difficult to use the plastic coated with any such paint in applications where non-carbonizability is required such as a railway rolling stock application.

A cover obtained by applying an inorganic coating agent to a glass fiber sheet has heretofore been known as a cover for lighting for railway rolling stocks. However, a general cover obtained by applying the inorganic coating agent to the glass fiber sheet or impregnating the sheet with the agent involves a problem in that the cover has low incombustibility when the binder of the agent contains an organic component. Meanwhile, the cover has the following drawback when the binder is an inorganic component. The cover has low flexibility and is hence liable to break.

There has been disclosed a light-diffusing sheet including at least one glass fiber fabric and a pair of resin layers between which the glass fiber fabric is sandwiched, in which the resin layers are each constituted of a thermosetting resin or a photocurable resin such as a vinyl ester (see, for example, Patent Literature 2). In addition, there has been disclosed a glass fiber sheet including: at least one glass fiber fabric; a resin coating layer formed of a thermosetting resin formed by impregnating the glass fiber fabric with the resin and solidifying the resin; and a bead layer on at least one surface of the resin coating layer (see, for example, Patent Literature 3). However, each of those light-diffusing sheets has insufficient incombustibility and has low flexibility.

### Citation List

### Patent Literature

[PTL 1] JP 07-186333 A
[PTL 2] JP 4491778 B2
[PTL 3] JP 4539349 B2

### Summary of Invention

### Technical Problem

An object of the present invention is to provide a flame-retardant composite material showing extremely high flame retardancy despite including a combustible base material, and a lighting apparatus using the flame-retardant composite material.

### Solution to Problem

The inventors of the present invention have made extensive investigations to achieve the object, and as a result, have found that a composite material having extremely high flame retardancy is obtained by arranging, on at least one surface of a specific base material, a coating film formed of a specific silicone resin composition. Thus, the inventors have completed the present invention.

A flame-retardant composite material according to one embodiment of the present invention includes, on at least one surface of a plastic-based base material containing an inorganic compound, a coating film formed of a silicone resin composition (C) containing at least an inorganic oxide particle-containing condensation-reactive silicone resin.

In a preferred embodiment, the inorganic compound includes an inorganic filler.

In a preferred embodiment, the inorganic filler includes a glass fiber.

In a preferred embodiment, the plastic-based base material contains polycarbonate.

In a preferred embodiment, the inorganic oxide particle-containing condensation-reactive silicone resin includes a condensation-reactive silicone resin (A) formed of a cross-linked structural body in which inorganic oxide particles dispersed in a polysiloxane resin having a condensation-reactive group and the polysiloxane resin are cross-linked by a chemical bond.

In a preferred embodiment, in the condensation-reactive silicone resin (A), the polysiloxane resin having a condensation-reactive group contains any one of (i) a condensation-reactive group-containing polysilsesquioxane containing a T unit as a basic constituent unit, (ii) a condensation-reactive group-containing polysiloxane containing a D unit and a T unit as basic constituent units, and (iii) a combination of the condensation-reactive group-containing polysilsesquioxane containing a T unit as a basic constituent unit, and the condensation-reactive group-containing polysiloxane containing a D unit and a T unit as basic constituent units.

In a preferred embodiment, the polysiloxane resin having a condensation-reactive group further contains a polysiloxane resin having a silanol group except the (i), (ii), and (iii).

In a preferred embodiment, the silicone resin composition (C) contains: a condensation-reactive silicone resin (A) formed of a cross-linked structural body in which inorganic oxide particles dispersed in a polysiloxane resin having a condensation-reactive group and the polysiloxane resin are cross-linked by a chemical bond; and inorganic particles (B).

In a preferred embodiment, the inorganic particles (B) include at least one kind selected from glass frits, silica particles, alumina particles, aluminum hydroxide particles, magnesium hydroxide particles, tin oxide particles, and clay mineral particles.

In a preferred embodiment, the glass frits serving as the inorganic particles (B) each have a yield point of 300°C or more and 700°C or less.

In a preferred embodiment, the glass frits serving as the inorganic particles (B) are each formed of at least one kind of component selected from silicic acid, boric acid, borosilicic acid, aluminum oxide, calcium oxide, sodium oxide, lithium oxide, and phosphorus oxide.

In a preferred embodiment, the glass frits serving as the inorganic particles (B) are each formed of a component containing at least phosphorus oxide.

In a preferred embodiment, the glass frits serving as the inorganic particles (B) have an average particle diameter of from 0.1 µm to 1,000 µm.

In a preferred embodiment, a content of the inorganic particles (B) is from 0.1 part by weight to 500 parts by weight with respect to 100 parts by weight of the condensation-reactive silicone resin (A).

In a preferred embodiment, the plastic-based base material has a sheet shape or a plate shape.

In a preferred embodiment, the flame-retardant composite material according to the embodiment of the present invention has a thickness of from 50 µm to 6,000 µm.

In a preferred embodiment, the coating film formed of the silicone resin composition (C) has a thickness of from 5 µm to 1,000 µm.

In a preferred embodiment, the flame-retardant composite material according to the embodiment of the present invention has such a characteristic as to be free from igniting and carbonizing in a combustion test of a railway rolling stock material combustion test.

In a preferred embodiment, the flame-retardant composite material according to the embodiment of the present invention has incombustibility in a combustion test of a railway rolling stock material combustion test.

In a preferred embodiment, the flame-retardant composite material according to the embodiment of the present invention has a gross calorific value per 10 minutes of 30 MJ/m² or less, a maximum heat generation rate of 300 kW/m² or less, and an ignition time of 60 seconds or more in a cone calorimeter test of a railway rolling stock material combustion test.

In a preferred embodiment, the flame-retardant composite material according to the embodiment of the present invention is used as a transporting machine interior material, a building material, a display material, a home appliance material, or an electronic circuit material.

In a preferred embodiment, the transporting machine interior material includes a lighting cover.

A lighting apparatus according to one embodiment of the present invention is a lighting apparatus using the flame-retardant composite material according to the embodiment of the present invention, including at least: a light source for generating light to be used in lighting; and a lighting cover arranged to cover the light source and including the flame-retardant composite material, in which the light from the light source is transmitted by the flame-retardant composite material to be output.

### Advantageous Effects of Invention

The flame-retardant composite material according to the embodiment of the present invention includes, on a specific base material, a coating film formed of a specific silicone resin composition. Accordingly, the material is extremely excellent in flame retardancy, and even when a main component for the base material is combustible, at the time of flame contact, the material does not allow fire to spread, and the material preferably neither ignites nor carbonizes. In addition, the flame-retardant composite material according to the embodiment of the present invention is additionally improved in strength of the coating film and hence shows extremely high flame retardancy. Accordingly, even when the thickness of the base material is relatively small, at the time of flame contact, the material does not allow fire to spread, and the material neither ignites nor carbonizes. Accordingly, the flame-retardant composite material according to the embodiment of the present invention is particularly useful as an interior material for transporting machines such as a railway rolling stock, an aircraft, an automobile, a ship, an elevator, and an escalator, a building material, a display material, a home appliance material, or an electronic circuit material. In addition, the material can be particularly suitably utilized as the lighting cover of a lighting apparatus.

### Brief Description of Drawings

FIG. **1** is a schematic sectional view for illustrating an example of a flame-retardant composite material of the present invention.
FIG. 2 is a perspective view of a combustion test apparatus used in a combustion test in Examples.
FIG. 3 is a schematic view of a combustion test apparatus used in a cone calorimeter test in Examples.

### Description of Embodiments

A flame-retardant composite material of the present invention includes, on at least one surface of a plastic-based base material containing an inorganic compound, a coating film formed of a silicone resin composition (C) containing at least an inorganic oxide particle-containing condensation-reactive silicone resin (hereinafter sometimes referred to as "inorganic oxide particle-containing silicone resin coating film").

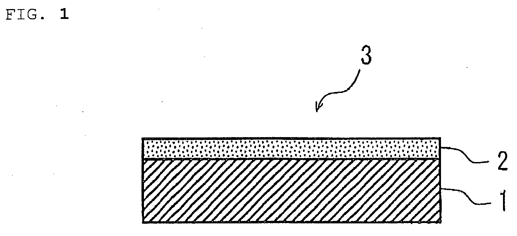

FIG. **1** is a schematic sectional view for illustrating an example of the flame-retardant composite material of the present invention. In this example, a flame-retardant composite material 3 includes, on one surface of a base material 1, a coating film (coating layer) 2 formed of an inorganic oxide particle-containing condensation-reactive silicone resin. It should be noted that the material may include the coating film on each of both surfaces of the base material 1.

### [Base Material]

The base material is a plastic-based base material containing an inorganic compound. The base material preferably has a sheet shape or a plate shape. It should be noted that the base material may have a curved surface. That is, the term "sheet shape" as used herein means not only a flat sheet shape but also a sheet shape having a three-dimensional curved surface, and the term "plate shape" as used herein means not only a flat plate shape but also a plate shape having a three-dimensional curved surface. It should be noted that a layered product formed of a pressure-sensitive adhesive or an adhesive is not included in the base material in the present invention.

Examples of the plastic-based base material include plastic-based base materials (including a laminate including at least a plastic-based base material) such as a plastic sheet (meaning not only a flat sheet but also a sheet having a three-dimensional curved surface) and a plate-shaped product (meaning not only a flat plate-shaped product but also a plate-shaped product having a three-dimensional curved surface). A material for such plastic-based base material (i.e., a plastic material) is, for example, a thermoplastic resin or a thermosetting resin. Examples of the thermoplastic resin include: olefin-based resins each using an α-olefin as a monomer such as polyethylene (PE), polypropylene (PP), an ethylene-propylene copolymer, and an ethylene-vinyl acetate copolymer (EVA); polycarbonate (PC); polyester-based resins such as polyethylene terephthalate(PET),polyethylene naphthalate(PEN), and polybutylene terephthalate (PBT); polyvinyl chloride (PVC); a vinyl acetate-based resin; styrene-based resins such as polystyrene, an ABS resin, and an AS resin; an acrylic resin; polyacrylonitrile; polyphenylenesulfide (PPS); amide-based resins such as polyamide (nylon) and wholly aromatic polyamide (aramid); polyimide (PI); polyamide imide (PAI); polyether ether ketone (PEEK); polyarylate (PAR); polysulfone (PSF); polyether sulfone (PES); fluorine-based resins such as polytetrafluoroethylene (PTFE); cyclicpolyolefin; polyacetal (POM); and polyphenylene ether (including modified polyphenylene ether). In addition, examples of the thermosetting resin include an epoxy resin, a phenol resin, a melamine resin, a urea resin, an unsaturated polyester resin, and an alkyd resin. Those materials may be used alone or in combination.

Of those, an olefin-based resin or a polycarbonate resin is preferred as the material for the plastic-based base material (i. e. , the plastic material) because any such resin is particularly excellent in flame retardancy, and the polycarbonate resin is more preferred. The use of the polycarbonate resin as the material for the plastic-based base material can lead to additionally effective expression of the effects of the present invention.

The base material contains an inorganic compound. When the base material contains the inorganic compound, the flame retardancy and strength of the base material can improve. Examples of such inorganic compound include an inorganic flame retardant and an inorganic filler. Examples of the inorganic flame retardant include: a metal hydroxide such as aluminum hydroxide or magnesium hydroxide; a boron-based compound; a phosphorus-based compound; an antimony-based compound; and a sulfur-based flame retardant. Such inorganic compound is preferably the inorganic filler, more preferably a glass fiber because the effects of the present invention can be expressed in an additionally effective manner. Such inorganic compounds may be used alone or in combination.

In view of the foregoing, the base material is particularly preferably a plastic-based base material containing an inorganic compound, the inorganic compound being a glass fiber and the plastic-based base material containing a polycarbonate resin, because the effects of the present invention can be expressed in a particularly effective manner. That is, it is particularly preferred that the base material contain an inorganic compound and a plastic material, the inorganic compound be a glass fiber, and the plastic material contain a polycarbonate resin.

The content of the inorganic compound in the base material is preferably from 0.1 wt% to 50 wt%, more preferably from 1 wt% to 45 wt%, still more preferably from 3 wt% to 40 wt%, particularly preferably from 5 wt% to 35 wt%. When the content of the inorganic compound in the base material is adjusted to fall within the range, the flame-retardant composite material of the present invention can express the effects of the present invention in an additionally effective manner.

The content of the plastic material in the base material is preferably from 50 wt% to 99.9 wt%, more preferably from 55 wt% to 99 wt%, still more preferably from 60 wt% to 97 wt%, particularly preferably from 65 wt% to 95 wt%. When the content of the plastic material in the base material is adjusted to fall within the range, the flame-retardant composite material of the present invention can express the effects of the present invention in an additionally effective manner.

The content of the polycarbonate resin in the plastic material is preferably from 50 wt% to 100 wt%, more preferably from 70 wt% to 100 wt%, still more preferably from 90 wt% to 100 wt%, particularly preferably from 95 wt% to 100 wt%, most preferably substantially 100 wt%. When the content, of the polycarbonate resin in the plastic material is adjusted to fall within the range, the flame-retardant composite material of the present invention can express the effects of the present invention in an additionally effective manner.

The base material may be subjected to any appropriate other flame-retarding treatment. Such flame-retarding treatment is, for example, the addition of an organic flame retardant. Examples of such organic flame retardant include a fluorine-based compound, a chlorine-based compound, a bromine-based compound, a phosphorus-based compound, a silicone-based compound, and a sulfur-based flame retardant. Such organic flame retardants may be used alone or in combination.

It should be noted that out of both surfaces of the plastic-based base material, the surface on the side where the inorganic oxide particle-containing silicone resin coating film is formed is preferably free from being subjected to any peeling treatment in terms of adhesiveness.

The thickness of the plastic-based base material can be appropriately selected depending on applications and the like, but an upper limit for the thickness is typically 5,000 µm, preferably 4,000µm, more preferably 3, 000 µm, and a lower limit for the thickness is preferably 45 µm, more preferably 80 µm, still more preferably 100 µm, particularly preferably 150 µm.

It should be noted that a primer layer in direct contact with both the coating film formed of the silicone resin composition (C) and the plastic-based base material may be further arranged for improving adhesiveness between the plastic-based base material and the coating film formed of the silicone resin composition (C).

A compound to be used in the formation of the primer layer is, for example, a component having adhesive properties with both the coating film formed of the silicone resin composition (C) and the plastic-based base material (including a component that expresses the adhesive properties through curing or a reaction), and specific examples thereof include a silane-based coupling agent (including a partial hydrolysis condensate) and a (meth)acryloyl group-containing organic compound. Of those, a silane-based coupling agent is preferred from the viewpoint that its surface hardly carbonizes at the time of its combustion.

The silane-based coupling agent is, for example, a silane-based coupling agent having, in the same molecule, a reactive functional group such as an amino group, a vinyl group, an epoxy group, a mercapto group, a chloro group, or a (meth) acryloyl group, and a hydrolyzable alkoxysilyl group. An amino group-containing silane coupling agent is preferred from the viewpoint of an anchoring property with the base material.

Examples of the amino group-containing silane coupling agent include 3-aminopropyltrimethoxysilane, 3-aminopropyltriethoxysilane, 3-dimethylaminopropyl(triethoxy)silane, 3-dimethylaminopropyl(trimethoxy)silane, 3-diethylaminopropyl(triethoxy)silane, 3-diethylaminopropyl(trimethoxy)silane, 2-dimethylaminoethyl(triethoxy)silane, 2-dimethylaminoethyl(trimethoxy)silane, 3-dimethylaminopropyl(diethoxy)methylsilane, 3-dibutylaminopropyl(triethoxy)silane, aminophenyltrimethoxysilane, aminophenyltriethoxysilane, 3-(N-methylamino)propyltrimethoxysilane, and 3-(N-methylamino)propyltriethoxysilane. Of those, 3-aminopropyltrimethoxysilane or 3-aminopropyltriethoxysilane is preferred from the viewpoint of availability.

A primer treatment for the formation of the primer layer is, for example, a treatment involving applying a material for the primer layer to the surface of the plastic-based base material by means of a method such as coating, dip coating, or spray coating. In addition, an anchoring effect can be exhibited by incorporating such a solvent as to dissolve the plastic-based base material into the material for the primer layer to roughen the surface of the plastic-based base material.

In addition to the primer layer (easy-adhesion layer), a light-diffusing layer, an antireflection layer, an ultraviolet light-absorbing layer, a heat-shielding layer, a heat-insulating layer, or the like may be arranged on at least one surface of the plastic-based base material to the extent that the flame retardancy of the base material is not impaired.

An adhesive layer or a pressure-sensitive adhesive layer may be arranged between the plastic-based base material and the coating film formed of the silicone resin composition (C). Any appropriate thickness can be adopted as the thickness of such adhesive layer or pressure-sensitive adhesive layer depending on purposes to the extent that the effects of the present invention are not impaired.

A layer formed of any appropriate adhesive can be adopted as the adhesive layer. Examples of such adhesive include a natural rubber adhesive, an α-olefin-based adhesive, a urethane resin-based adhesive, an ethylene-vinyl acetate resin emulsion adhesive, an ethylene-vinyl acetate resin-based hot-melt adhesive, an epoxy resin-based adhesive, a vinyl chloride resin solvent-based adhesive, a chloroprene rubber-based adhesive, a cyanoacrylate-based adhesive, a silicone-based adhesive, a styrene-butadiene rubber solvent-based adhesive, a nitrile rubber-based adhesive, a nitrocellulose-based adhesive, a reactive hot-melt adhesive, a phenol resin-based adhesive, a modified silicone-based adhesive, a polyester-based hot-melt adhesive, a polyamide resin hot-melt adhesive, a polyimide-based adhesive, a polyurethane resin hot-melt adhesive, a polyolefin resin hot-melt adhesive, a polyvinyl acetate resin solvent-based adhesive, a polystyrene resin solvent-based adhesive, a polyvinyl alcohol-based adhesive, a polyvinylpyrrolidone resin-based adhesive, a polyvinyl butyral-based adhesive, a polybenzimidazole adhesive, a polymethacrylate resin solvent-based adhesive, a melamine resin-based adhesive, a urea resin-based adhesive, and a resorcinol-based adhesive. Such adhesives may be used alone or in combination.

The adhesives are classified into, for example, a thermosetting adhesive and a hot-melt adhesive depending on their adhesion forms. Such adhesives may be used alone or in combination.

When the thermosetting adhesive is heated, the adhesive thermally cures to solidify, thereby expressing its adhesive strength. Examples of the thermosetting adhesive include an epoxy-based thermosetting adhesive, a urethane-based thermosetting adhesive, and an acrylic thermosetting adhesive. The curing temperature of the thermosetting adhesive is, for example, from 100°C to 200°C.

When the hot-melt adhesive is heated, the adhesive melts or softens to thermally fuse with an adherend. After that, when the adhesive is cooled, the adhesive solidifies to adhere to the adherend. Examples of the hot-melt adhesive include a rubber-based hot-melt adhesive, a polyester-based hot-melt adhesive, a polyolefin-based hot-melt adhesive, an ethylene-vinyl acetate resin-based hot-melt adhesive, a polyamide resin hot-melt adhesive, and a polyurethane resin hot-melt adhesive. The softening temperature (ring and ball method) of the hot-melt adhesive is, for example, from 100°C to 200°C. In addition, the melt viscosity of the hot-melt adhesive is, for example, from 100 mPa·s to 30,000 mPa·s at 180°C.

A layer formed of any appropriate pressure-sensitive adhesive can be adopted as the pressure-sensitive adhesive layer. Examples of such pressure-sensitive adhesive include rubber-based pressure-sensitive adhesives (such as a synthetic rubber-based pressure-sensitive adhesive and a natural rubber-based pressure-sensitive adhesive), a urethane-based pressure-sensitive adhesive, an acrylic urethane-based pressure-sensitive adhesive, an acrylic pressure-sensitive adhesive, a silicone-based pressure-sensitive adhesive, a polyester-based pressure-sensitive adhesive, a polyamide-based pressure-sensitive adhesive, an epoxy-based pressure-sensitive adhesive, a vinyl alkyl ether-based pressure-sensitive adhesive, and a fluorine-based pressure-sensitive adhesive. Such pressure-sensitive adhesives may be used alone or in combination.

The pressure-sensitive adhesives are classified into, for example, an emulsion-type pressure-sensitive adhesive, a solvent-type pressure-sensitive adhesive, an ultraviolet light-cross-linkable (UV-cross-linkable) pressure-sensitive adhesive, an electron beam-cross-linkable (EB-cross-linkable) pressure-sensitive adhesive, and a thermofusible pressure-sensitive adhesive (hot-melt pressure-sensitive adhesive) depending on their pressure-sensitive adhesion forms. Such pressure-sensitive adhesives may be used alone or in combination.

### [Inorganic Oxide Particle-containing Condensation-reactive Silicone Resin]

Any appropriate polysiloxane resin can be adopted as the "condensation-reactive silicone resin" of the "inorganic oxide particle-containing condensation-reactive silicone resin" in the present invention as long as the resin is a silicone resin (polysiloxane resin) having a condensation-reactive group. Examples of such polysiloxane resin include: a condensation-reactive group-containing polysiloxane containing a D unit and a T unit as basic constituent units (hereinafter sometimes referred to as "D-T-unit condensation-reactive group-containing polysiloxane"); a condensation-reactive group-containing polysilsesquioxane containing a T unit as a basic constituent unit (hereinafter sometimes referred to as "condensation-reactive group-containing polysilsesquioxane"); a condensation-reactive group-containing polysilsesquioxane containing a D unit as a basic constituent unit; and a condensation-reactive group-containing polysiloxane containing an M unit and a Q unit as basic constituent units. Such resins may be used alone or in combination.

Of the condensation-reactive silicone resins, a condensation-reactive group-containing polysilsesquioxane, a D-T-unit condensation-reactive group-containing polysiloxane, or a combination of a condensation-reactive group-containing polysilsesquioxane and a D-T-unit condensation-reactive group-containing polysiloxane is preferred from the viewpoint of being able to impart flexibility to the composite material. In the present invention, a D-T-unit condensation-reactive group-containing polysiloxane or a combination of a condensation-reactive group-containing polysilsesquioxane and a D-T-unit condensation-reactive group-containing polysiloxane is particularly preferred.

Examples of the condensation-reactive group include a silanol group, an alkoxysilyl group (such as a C₁₋₆ alkoxysilyl group), a cycloalkyloxysilyl group (such as a C₃₋₆ cycloalkyloxysilyl group), and an aryloxysilyl group (such as a C₆₋₁₀ aryloxysilyl group). Of those, as the condensation-reactive group, a silanol group, an alkoxysilyl group, a cycloalkyloxysilyl group, or an aryloxysilyl group is preferred, and a silanol group or an alkoxysilyl group is particularly preferred.

The D-T-unit condensation-reactive group-containing polysiloxane specifically contains, as basic constituent units, a D unit represented by the following formula (1) and a T unit represented by the following formula (2).

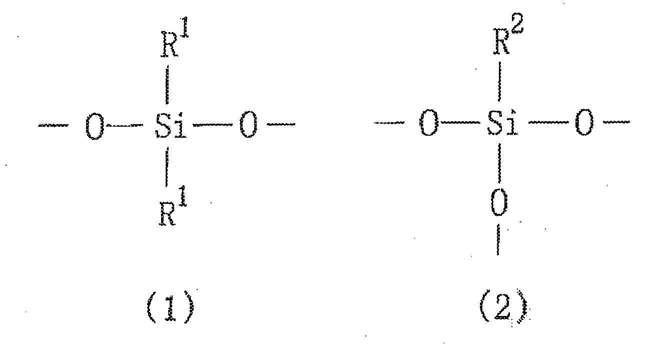

In the formula (1), R¹'s may be identical to or different from each other, and each represent a monovalent hydrocarbon group selected from a saturated hydrocarbon group and an aromatic hydrocarbon group. In the formula (2), R² represents a monovalent hydrocarbon group selected from a saturated hydrocarbon group and an aromatic hydrocarbon group.

Examples of the saturated hydrocarbon group represented by any one of R¹'s and R² include: a linear or branched alkyl group having 1 to 6 carbon atoms such as a methyl, ethyl, propyl, isopropyl, butyl, isobutyl, pentyl, or hexyl group; and a cycloalkyl group having 3 to 6 carbon atoms such as a cyclopentyl or cyclohexyl group. In addition, the aromatic hydrocarbon group represented by any one of R¹'s and R² is, for example, an aryl group having 6 to 10 carbon atoms such as a phenyl or naphthyl group.

R¹'s and R² each represent preferably an alkyl group having 1 to 6 carbon atoms or an aryl group having 6 to 10 carbon atoms, more preferably a methyl group.

The D units each represented by the formula (1) in the D-T-unit condensation-reactive group-containing polysiloxane, which may be identical to or different from each other, are preferably identical to each other. In addition, the T units each represented by the formula (2) in the D-T-unit condensation-reactive group-containing polysiloxane, which may be identical to or different from each other, are preferably identical to each other.

The D-T-unit condensation-reactive group-containing polysiloxane is a partial condensate of corresponding silicone monomers (e.g., a partial condensate of a bifunctional silicone monomer such as a dialkyl (or aryl) dialkoxysilane and a trifunctional silicone monomer such as an alkyl(or aryl)trialkoxysilane), and contains, in its constituent units, a D unit, a T unit, and a group represented by the following formula (3). The group represented by the formula (3) is bonded to a silicon atom and is present at a molecular terminal.

-OR³ (3)

R³ represents a monovalent hydrocarbon group selected from a saturated hydrocarbon group and an aromatic hydrocarbon group. Examples of the saturated hydrocarbon group and the aromatic hydrocarbon group include the same examples as those of the saturated hydrocarbon group and the aromatic hydrocarbon group each represented by any one of R¹'s in the formula (1). R³ represents preferably a saturated hydrocarbon group, more preferably an alkyl group having 1 to 6 carbon atoms, still more preferably a methyl group or an ethyl group.

Examples of such D-T-unit condensation-reactive group-containing polysiloxane include an alkoxysilyl group (such as a C₁₋₆ alkoxysilyl group)-containing polymethylsiloxane, an alkoxysilyl group (such as a C₁₋₆ alkoxysilyl group)-containing polymethylphenylsiloxane, and an alkoxysilyl group (such as a C₁₋₆ alkoxysilyl group)-containing polyphenylsiloxane. Those D-T-unit alkoxysilyl group-containing polysiloxanes may be used alone or in combination.

Of the D-T-unit condensation-reactive group-containing polysiloxanes, a C₁₋₆ alkoxysilyl group-containing polysiloxane is preferred, methoxysilyl group-containing polysiloxane or ethoxysilyl group-containing polysiloxane is more preferred, and methoxysilyl group-containing polymethylsiloxane or ethoxysilyl group-containing polymethylsiloxane is still more preferred.

An upper limit for the content of the condensation-reactive group (such as an alkoxysilyl group) of such D-T-unit condensation-reactive group-containing polysiloxane is, for example, preferably 30 wt%, more preferably 25 wt%, and a lower limit for the content is preferably 8 wt%, more preferably 10 wt%, still more preferably 12 wt%. The content of the condensation-reactive group (such as an alkoxysilyl group) can be determined with a differential weight reduction-measuring apparatus (TGA) from a weight reduction ratio when the temperature of the polysiloxane is increased from room temperature to 300°C.

An upper limit for the number-average molecular weight (in terms of standard polystyrene measured by GPC) of the D-T-unit condensation-reactive group-containing polysiloxane is preferably 6,000, more preferably 5,500, still more preferably 5,300, and a lower limit for the number-average molecular weight is preferably 800, more preferably 1,000, still more preferably 1,200.

A product (D-T-unit alkoxysilyl group-containing polysiloxane) commercially available under, for example, the following trade name may also be used as the D-T-unit condensation-reactive group-containing polysiloxane:"X-40-9246", "X-40-9250", or "X-40-9227" (all of which are manufactured by Shin-Etsu Chemical Co., Ltd.).

The condensation-reactive group-containing polysilsesquioxane specifically contains a T unit represented by the formula (2) as a basic constituent unit. The T units each represented by the formula (2) in the condensation-reactive group-containing polysilsesquioxane, which may be identical to or different from each other, are preferably identical to each other.

The condensation-reactive group-containing polysilsesquioxane is a partial condensate of a corresponding silicone monomer (e.g., a partial condensate of a trifunctional silicone monomer such as an alkyl(or aryl)trialkoxysilane), and contains, in its constituent units, a T unit and a group represented by the following formula (4). The group represented by the formula (4) is bonded to a silicon atom and is present at a molecular terminal.

-OR⁴ (4)

R⁴ represents a monovalent hydrocarbon group selected from a saturated hydrocarbon group and an aromatic hydrocarbon group. Examples of the saturated hydrocarbon group and the aromatic hydrocarbon group include the same examples as those of the saturated hydrocarbon group and the aromatic hydrocarbon group each represented by any one of R¹'s in the formula (1). R⁴ represents preferably a saturated hydrocarbon group, more preferably an alkyl group having 1 to 6 carbon atoms, still more preferably a methyl group or an ethyl group.

The condensation-reactive group-containing polysilsesquioxane may be any one of, for example, a random type, a ladder type, and a cage type. The condensation-reactive group-containing polysilsesquioxane is most preferably of a random type from the viewpoint of the flexibility of the flame-retardant composite material. Such condensation-reactive group-containing polysilsesquioxanes may be used alone or in combination.

The condensation-reactive group-containing polysilsesquioxane is preferably a C₁₋₆ alkoxysilyl group-containing polysilsesquioxane, more preferably methoxysilyl group-containing polysilsesquioxane or ethoxysilyl group-containing polysilsesquioxane, still more preferably methoxysilyl group-containing polymethylsilsesquioxane or ethoxysilyl group-containing polymethylsilsesquioxane.

An upper limit for the content of the condensation-reactive group (such as an alkoxysilyl group) of such condensation-reactive group-containing polysilsesquioxane is preferably 50 wt%, more preferably 48 wt%, still more preferably 46 wt%, and a lower limit for the content is preferably 10 wt%, more preferably 15 wt%, still more preferably 20 wt%. The content of the condensation-reactive group (such as an alkoxysilyl group) can be determined with a differential weight reduction-measuring apparatus (TGA) from a weight reduction ratio when the temperature of the polysilsesquioxane is increased from room temperature to 300°C.

An upper limit for the number-average molecular weight (in terms of standard polystyrene measured by GPC) of the condensation-reactive group-containing polysilsesquioxane is preferably 6, 000, more preferably 3, 500, still more preferably 3, 000, and a lower limit for the number-average molecular weight is preferably 200, more preferably 300, still more preferably 400.

A product (alkoxysilyl group-containing polysilsesquioxane) commercially available under, for example, the following trade name may also be used as the condensation-reactive group-containing polysilsesquioxane:"KC-89", "KR-500", or" X-40-9225" (all of which are manufactured by Shin-Etsu Chemical Co., Ltd.).

A product commercially available under, for example, the following trade name as a polysiloxane compound having a reactive silanol group in its molecule (terminal) may also be used as the condensation-reactive group-containing polysilsesquioxane: "X-21-3153" or "X-21-5841" (all of which are manufactured by Shin-Etsu Chemical Co., Ltd.).

The ratio of the total amount of the D-T-unit condensation-reactive group-containing polysiloxane and the condensation-reactive group-containing polysilsesquioxane in the total of the polysiloxane resin is preferably 50 wt% or more, more preferably 70 wt% or more, still more preferably 90 wt% or more.

In the present invention, the polysiloxane resin is preferably a polysiloxane resin having an alkoxysilyl group and/or a silanol group in a molecule thereof (at a terminal thereof), and having a total content of such groups (an alkoxysilyl group and a silanol group) of from 8 wt% to 48 wt%, the polysiloxane resin being cross-linked with inorganic oxide particles by a chemical bond. An upper limit for the total content of an alkoxysilyl group and a silanol group is preferably 30 wt%, and a lower limit for the total content is preferably 10 wt%.

In the present invention, the condensation-reactive silicone resin is preferably any one of the condensation-reactive group-containing polysilsesquioxane, the D-T-unit condensation-reactive group-containing polysiloxane, and a combination of the condensation-reactive group-containing polysilsesquioxane and the D-T-unit condensation-reactive group-containing polysiloxane particularly from the viewpoints of, for example, the flexibility, strength, and incombustibility of the flame-retardant composite material. In this case, an upper limit for a ratio between the D-T-unit condensation-reactive group-containing polysiloxane and the condensation-reactive group-containing polysilsesquioxane (former/latter (weight ratio)) is preferably 4. 9, more preferably 3, still more preferably 2, and a lower limit for the ratio is preferably 0, more preferably 0.02. The upper limit for the ratio between the D-T-unit condensation-reactive group-containing polysiloxane and the condensation-reactive group-containing polysilsesquioxane (former/latter (weight ratio)) is preferably 100. In addition, the D-T-unit condensation-reactive group-containing polysiloxane is more preferably adopted as the condensation-reactive silicone resin because the flexibility can be additionally improved.

The "condensation-reactive silicone resin" of the "inorganic oxide particle-containing condensation-reactive silicone resin" in the present invention is a silicone resin (polysiloxane resin) having a condensation-reactive group. Such polysiloxane resin having a condensation-reactive group may further contain a polysiloxane resin having a silanol group except (i) the condensation-reactive group-containing polysilsesquioxane containing a T unit as a basic constituent unit, (ii) the condensation-reactive group-containing polysiloxane containing a D unit and a T unit as basic constituent units, and (iii) the combination of the condensation-reactive group-containing polysilsesquioxane containing a T unit as a basic constituent unit, and the condensation-reactive group-containing polysiloxane containing a D unit and a T unit as basic constituent units.

In the present invention, a cross-linked structural body formed through the cross-linking of the condensation-reactive silicone resin with inorganic oxide particles by a chemical bond is preferably used as the inorganic oxide particle-containing condensation-reactive silicone resin from the viewpoints of the heat resistance and strength of the flame-retardant composite material. For example, a condensation-reactive silicone resin (A) formed of a cross-linked structural body in which inorganic oxide particles dispersed in a polysiloxane resin having a condensation-reactive group and the polysiloxane resin are cross-linked by a chemical bond is preferably used. The condensation-reactive silicone resin (A) is described below.

The above-mentioned polysiloxane resin may be used as the polysiloxane resin having a condensation-reactive group. Such polysiloxane resin having a condensation-reactive group is preferably the condensation-reactive group-containing polysilsesquioxane, the D-T-unit condensation-reactive group-containing polysiloxane, or the combination of the condensation-reactive group-containing polysilsesquioxane and the D-T-unit condensation-reactive group-containing polysiloxane.

The inorganic oxide particles only need to be inorganic oxide particles each having a reactive functional group on its surface. Examples of such inorganic oxide particles include silica (SiO₂ or SiO), alumina (Al₂O₃), a glass frit, antimony-doped tin oxide (ATO), titanium oxide (titania, TiO₂), and zirconia (ZrO₂). The inorganic oxide particles may be composite inorganic oxide particles each formed of two or more kinds of inorganic oxides. Of those, silica is particularly preferred. Such inorganic oxide particles may be used alone or in combination.

Examples of the reactive functional group include a hydroxyl group, an isocyanate group, a carboxyl group, an epoxy group, an amino group, a mercapto group, a vinyl-type unsaturated group, a halogen atom, and an isocyanurate group. Of those, a hydroxyl group is preferred as the reactive functional group. The hydroxyl groups on the surface of silica particles are present as silanol groups.

An upper limit for the average particle diameter (primary particle diameter) of the inorganic oxide particles is preferably 500 µm, more preferably 100 µm, still more preferably 10 µm, particularly preferably 1 µm, and a lower limit for the average particle diameter is preferably 1 nm. It should be noted that the average particle diameter can be measured by, for example, a dynamic light scattering method.

The particle size distribution of the inorganic oxide particles is preferably narrow, and the particles are preferably in such a monodispersed state that the particles are dispersed while maintaining the primary particle diameter. In addition, the surface potential of each of the inorganic oxide particles is preferably present in an acidic region (e.g. , at a pH of from 2 to 5, preferably at a pH of from 2 to 4). Each of the particles only needs to have such surface potential at the time of a reaction with the polysiloxane resin.

Colloidal inorganic oxide particles are preferably used as the inorganic oxide particles. Examples of the colloidal inorganic oxide particles include colloidal silica, colloidal alumina (alumina sol), and colloidal tin oxide (tin oxide water dispersion).

As described in, for example, JP 53-112732 A, JP 57-9051 B2, and JP 57-51653 B2, an example of the colloidal silica is a colloid of silicon dioxide (silicic anhydride) fine particles (having an average particle diameter of preferably from 5 nm to 1,000 nm, more preferably from 10 nm to 100 nm).

In addition, the colloidal silica may contain, for example, alumina or sodium aluminate as required, and may also contain a stabilizer such as an inorganic base (e.g., sodium hydroxide, potassium hydroxide, lithium hydroxide, or ammonia) or an organic base (e.g., tetramethylammonium) as required.

Such colloidal silica is not particularly limited, and may be produced by a known sol-gel method or the like, and specific examples thereof include sol-gel methods described in Werner Stober et al; J. Colloid and Interface Sci., 26, 62-69 (1968), Rickey D. Badley et al; Langmuir 6, 792-801 (1990), and Journal of the Japan Society of Colour Material, 61 [9] 488-493 (1988).

The colloidal silica is preferably in a bare state without being subjected to any surface treatment. The colloidal silica has a silanol group as a surface functional group.

In addition, a commercial product can be used as such colloidal silica, and specific examples thereof include: products available under the trade names "SNOWTEX-XL", "SNOWTEX-YL", "SNOWTEX-ZL", "PST-2", "SNOWTEX-20", "SNOWTEX-30", "SNOWTEX-C", "SNOWTEX-O", "SNOWTEX-OS", "SNOWTEX-OL", and "SNOWTEX-50" (all of which are manufactured by Nissan Chemical Industries, Ltd.); and products available under the trade names "Adelite AT-30", "Adelite AT-40", and "Adelite AT-50" (all of which are manufactured by Nippon Aerosil Co., Ltd.). Of those, a product available under the trade name "SNOWTEX-O", "SNOWTEX-OS", or "SNOWTEX-OL" is particularly preferred.

A commercial product can be used also as the colloidal inorganic particles other than the colloidal silica. Specific examples thereof include: alumina sol (hydrosol) such as products available under the trade names "ALUMINASOL 100", "ALUMINASOL 200", and "ALUMINASOL 520" (all of which are manufactured by Nissan Chemical Industries, Ltd.);titaniasol (hydrosol) such as products available under the trade name "TTO-W-5" (manufactured by Ishihara Sangyo Kaisha, Ltd.) and the trade name "TS-020" (manufactured by Tayca Corporation); and tin oxide water dispersions such as products available under the trade names "SN-100D" and "SN-100S" (all of which are Ishihara Sangyo Kaisha, Ltd.).

In the present invention, the inorganic oxide particles are preferably colloidal silica having a primary particle diameter in the range of from 1 nm to 500 um and a surface potential in the pH range of from 2 to 5, the colloidal silica having, on its surface, a silanol group that chemically bonds to the polysiloxane resin to cross-link the polysiloxane resin.

An upper limit for the content of the inorganic oxide particles in the inorganic oxide particle-containing condensation-reactive silicone resin (or the content of the inorganic oxide particles in the coating film) is preferably 30 wt%, more preferably 20 wt%, still more preferably 15 wt%, and a lower limit for the content is preferably 1 wt%, more preferably 2 wt%, still more preferably 3 wt%. When the content of the inorganic oxide particles is excessively small, the mechanical strength of the coating film is liable to reduce, and when the content of the inorganic oxide particles is excessively large, the coating film is liable to become brittle.

Next, a method of producing the inorganic oxide particle-containing condensation-reactive silicone resin is described.

The inorganic oxide particle-containing condensation-reactive silicone resin can be produced by, for example, causing the inorganic oxide particles and the polysiloxane resin having a condensation-reactive group (preferably the condensation-reactive group-containing polysilsesquioxane, the D-T-unit condensation-reactive group-containing polysiloxane, the combination of the condensation-reactive group-containing polysilsesquioxane and the D-T-unit condensation-reactive group-containing polysiloxane, or any one of these polymers and the polysiloxane resin having a silanol group) to react with each other in a solvent preferably in the presence of an acid. It should be noted that the polysiloxane resin has a functional group capable of reacting with the reactive functional group on the surface of each of the inorganic oxide particles. When the reactive functional group on the surface of each of the inorganic oxide particles is a silanol group, the condensation-reactive group reacts with the silanol group to form a cross-linked structure.

Examples of the solvent include: water; alcohols such as methanol, ethanol, 2-propanol, 2-methoxyethanol, and propylene glycol monomethyl ether; and mixtures thereof. Of those, the solvent is preferably a mixed solvent of water and an alcohol, more preferably a mixed solvent of water and 2-propanol, a mixed solvent of water, 2-propanol, and 2-methoxyethanol, or a mixed solvent of water, 2-propanol, and propylene glycol monomethyl ether.

Examples of the acid include: inorganic acids such as hydrochloric acid, nitric acid, sulfuric acid, and phosphoric acid; and organic acids such as acetic acid and p-toluenesulfonic acid. Of those, the acid is preferably an inorganic acid, more preferably nitric acid. Any such acid can be used as an aqueous solution. The usage amount of the acid only needs to be such an amount that the pH of a reaction system can be adjusted to from about 2 to 5 (preferably from about 2 to 4).

Any appropriate method can be adopted as a method for the reaction. Such method may be any one of, for example, (i) a method involving adding a mixed liquid of the polysiloxane resin and the solvent to a mixed liquid of the inorganic oxide particles and the solvent, (ii) a method involving adding the mixed liquid of the inorganic oxide particles and the solvent to the mixed liquid of the polysiloxane resin and the solvent, and (iii) a method involving adding, to the solvent, both the mixed liquid of the inorganic oxide particles and the solvent, and the mixed liquid of the polysiloxane resin and the solvent.

It should be noted that when the condensation-reactive group-containing polysilsesquioxane and the D-T-unit condensation-reactive group-containing polysiloxane are used in combination as the polysiloxane resins, the inorganic oxide particles, and a mixture of the condensation-reactive group-containing polysilsesquioxane and the D-T-unit condensation-reactive group-containing polysiloxane may be caused to react with each other. In addition, the following is permitted: first, the D-T-unit condensation-reactive group-containing polysiloxane is caused to react with the inorganic oxide particles, and then the condensation-reactive group-containing polysilsesquioxane is caused to react with the resultant. Further, the following is permitted: first, the condensation-reactive group-containing polysilsesquioxane is caused to react with the inorganic oxide particles, and then the D-T-unit condensation-reactive group-containing polysiloxane is caused to react with the resultant. When a method involving first causing the condensation-reactive group-containing polysilsesquioxane to react with the inorganic oxide particles, and then causing the D-T-unit condensation-reactive group-containing polysiloxane and/or the polysiloxane resin having a silanol group to react with the resultant, or a method involving causing the D-T-unit condensation-reactive group-containing polysiloxane and/or the polysiloxane resin having a silanol group to react with the inorganic oxide particles is adopted in the present invention, in the case where a coating film formed of a silicone resin is arranged on at least one surface of the base material by application, the flexibility of the coating film significantly improves.

An upper limit for a reaction temperature is preferably 180°C, more preferably 150°C, still more preferably 130°C, and a lower limit for the temperature is preferably 40°C, more preferably 50°C. In addition, an upper limit for a reaction time is preferably 24 hours, more preferably 12 hours, and a lower limit for the time is preferably 1 minute, more preferably 2 minutes.

After the completion of the reaction, the concentration and viscosity of the resultant are adjusted by removing the solvent by distillation as required. Thus, the silicone resin composition (C) containing at least the inorganic oxide particle-containing condensation-reactive silicone resin can be obtained.

In the present invention, the silicone resin composition (C) containing at least the inorganic oxide particle-containing condensation-reactive silicone resin may contain the condensation-reactive silicone resin (A) formed of the cross-linked structural body in which the inorganic oxide particles dispersed in the polysiloxane resin having a condensation-reactive group and the polysiloxane resin are cross-linked by a chemical bond, and inorganic particles (B). In the case where such silicone resin composition is used, a sheet that is significantly improved in flame retardancy and hence does not allow fire to spread at the time of flame contact despite including a combustible base material and despite the fact that the thickness of the base material is relatively small, and by extension, a sheet that neither ignites nor carbonizes at the time are obtained.

### [Inorganic Particles (B)]

Examples of the inorganic particles (B) include silica particles, alumina particles, aluminum hydroxide particles, titanium oxide particles, magnesium oxide particles, magnesium hydroxide particles, tin oxide particles, zirconia particles, particles of a clay mineral (talc, zeolite, or the like), and glass frits. The inorganic particles (B) may be used alone or in combination. It should be noted that the inorganic particles (B) are not chemically bonded to the polysiloxane resin having a condensation-reactive group.

The inorganic particles (B) are preferably the silica particles, the alumina particles, the aluminum hydroxide particles, the magnesium hydroxide particles, or the glass frits because a high flame-retarding effect is obtained even when the particles are used in a small amount. Further, the particles are more preferably the silica particles or the glass frits because transparency is obtained. In particular, the particles are more preferably the glass frits because a heat-generating property-suppressing effect is obtained in a cone calorimeter test.

Examples of the silica particles include: dry silica particles such as fumed silica particles or fused silica particles; wet silica particles; silica gel particles; and colloidal silica particles. Of those, the silica particles are preferably fumed silica particles such as Aerosil, more preferably hydrophobic fumed silica particles.

The yield point of each of the glass frits is preferably from 300°C to 700°C, more preferably from 300°C to 650°C, still more preferably from 300°C to 600°C. When the yield point of each of the glass frits is set to fall within the range, in the case where a flame-retardant composite material is produced, a suppressing effect on the calorific value of the composite material can be sufficiently expressed even in a cone calorimeter test.

Any appropriate glass frits can be adopted as the glass frits. Such glass frits are preferably inorganic particles (glass frits) having sinterability, more preferably inorganic particles (glass frits) each formed of at least one kind of component selected from silicic acid (or silicon oxide), boric acid (or boron oxide), borosilicic acid, aluminum oxide, calcium oxide, sodium oxide, lithium oxide, and phosphorus oxide. Typical examples of the glass frits include phosphate glass frits, borosilicate glass frits, alkali-free glass frits, and porcelain enamel frits. The glass frits are particularly preferably glass frits each formed of a component containing at least phosphorus oxide. In each of the glass frits each formed of the component containing at least phosphorus oxide, the content of phosphorus oxide is preferably from 5 wt% to 70 wt%. A lower limit for the content is preferably 10 wt%, more preferably 20 wt%, and an upper limit for the content is preferably 60 wt%, more preferably 50 wt%. When such glass frits are adopted, in the case where a flame-retardant composite material is produced, a suppressing effect on the calorific value of the composite material can be sufficiently expressed even in a cone calorimeter test.

The average particle diameter of the glass frits is preferably from 0.1 µm to 1,000 µm. A lower limit for the average particle diameter of the glass frits is preferably 0.5 µm, more preferably 1 µm, still more preferably 2 µm. In addition, an upper limit for the average particle diameter of the glass frits is preferably 500 µm, more preferably 300 µm, still more preferably 150 µm. When the average particle diameter of the glass frits is set to fall within the range, in the case where a flame-retardant composite material is produced, a suppressing effect on the calorific value of the composite material can be sufficiently expressed even in a cone calorimeter test.

Inorganic particles each having a hollow structure may be used as the inorganic particles (B). Examples of such inorganic particles include silica having a hollow structure and glass frits (e.g., phosphate glass frits) each having a hollow structure (including hollow glass beads).

An upper limit for the average particle diameter (primary particle diameter) of the inorganic particles (B) is preferably 500 µm, more preferably 300 µm, still more preferably 200 µm, particularly preferably 100 µm, and a lower limit for the average particle diameter is preferably 1 nm. It should be noted that the average particle diameter can be measured by, for example, a dynamic light scattering method.

In the present invention, the content of the inorganic particles (B) in the silicone resin composition (C) is preferably from 0.1 part by weight to 500 parts by weight with respect to 100 parts by weight of the condensation-reactive silicone resin (A). An upper limit for the content is preferably 400 parts by weight, more preferably 300 parts by weight, and a lower limit for the content is preferably 0.5 part by weight, more preferably 1 part by weight, still more preferably 2 parts by weight.

The silicone resin composition containing the condensation-reactive silicone resin (A) and the inorganic particles (B) can be produced by, for example, adding the inorganic particles (B) to a silicone resin composition containing the condensation-reactive silicone resin (A) obtained by the above-mentioned method.

In the present invention, an additive such as a curing catalyst may be added to the silicone resin composition (C) as required.

In the present invention, an upper limit for the solid content concentration of the silicone resin composition (C) is preferably 95 wt%, more preferably 90 wt%, and a lower limit for the solid content concentration is preferably 30 wt%, more preferably 40 wt% from the viewpoints of, for example, its handleability, applicability, and impregnating property.

### [Flame-retardant composite material]

The flame-retardant composite material of the present invention can be produced by arranging, on at least one surface of the plastic-based base material containing the inorganic compound, the coating film formed of the silicone resin composition (C) containing at least the inorganic oxide particle-containing condensation-reactive silicone resin (coating layer: flame-retardant silicone resin layer).

The flame-retardant composite material of the present invention is not limited to a plate shape, and can be used as a material having a specific shape such as a material deformed from a plate-shaped product by thermoforming as well.

The flame-retardant composite material of the present invention can be produced by, for example, applying the silicone resin composition (C) containing at least the inorganic oxide particle-containing condensation-reactive silicone resin onto at least one surface of the plastic-based base material containing the inorganic compound to form a coating film.

Through the use of any appropriate application method such as kiss coating, gravure coating, bar coating, spray coating, knife coating, wire coating, dip coating, die coating, curtain coating, dispenser coating, screen printing, or metal mask printing as a method of applying the silicone resin composition (C), the silicone resin composition (C) can be applied directly to form an applied film, followed by drying at, for example, a temperature of from 80°C to 150°C as required, to thereby provide the flame-retardant composite material 3 including, on one surface (or each of both surfaces) of the base material 1, the coating film (coating layer) 2 formed of the inorganic oxide particle-containing silicone resin as illustrated in FIG. 1.

In addition, the flame-retardant composite material of the present invention can be produced by, for example, applying the silicone resin composition (C) containing at least the inorganic oxide particle-containing condensation-reactive silicone resin onto a thin material to form a coating film, and laminating the coating film on at least one surface of the plastic-based base material containing the inorganic compound.

In order that the storage stability of the silicone resin composition (C) may be improved, and bubble defects and appearance unevenness at the time of the formation of the silicone resin composition (C) into a film may be reduced, a water-soluble organic solvent except an aliphatic monohydric alcohol is preferably added to the silicone resin composition (C) before its application. The usage amount of such water-soluble organic solvent except an aliphatic monohydric alcohol is preferably from 0.01 part by weight to 200 parts by weight, more preferably from 0.1 part by weight to 150 parts by weight with respect to 100 parts by weight of the silicone resin composition (C) (solid content).

Specific examples of the water-soluble organic solvent except an aliphatic monohydric alcohol include: glycol ether-based solvents such as methyl cellosolve (2-methoxyethanol), ethyl cellosolve (2-ethoxyethanol), ethylene glycol isopropyl ether, butyl cellosolve, carbitol, butyl carbitol, diethylene glycol acetate, ethylene glycol monophenyl ether, ethylene glycol monobenzyl ether, methoxymethoxy ethanol, propylene glycol monomethyl ether, propylene glycol monoethyl ether, and ethylene glycol monoacetate; glycol-based solvents such as ethylene glycol, tetraethylene glycol, propylene glycol, and dipropylene glycol; nitrogen-containing solvents such as N-methylpyrrolidone, dimethylformamide, and dimethylacetamide; and dimethyl sulfoxide. Such water-soluble organic solvents except an aliphatic monohydric alcohol may be used alone or in combination. A glycol ether-based solvent is preferred as such water-soluble organic solvent except an aliphatic monohydric alcohol because the solvent has satisfactory solubility for a hydrolyzed alkoxysilane and a condensate thereof.

An upper limit for the thickness of the coating film 2 is preferably 1,000 µm, more preferably 800 µm, still more preferably 500 µm, and a lower limit for the thickness is preferably 5 µm, more preferably 10 µm, still more preferably 20 µm.

In addition, the flame-retardant composite material of the present invention can be produced by, for example, applying the silicone resin composition (C) containing at least the inorganic oxide particle-containing condensation-reactive silicone resin onto a thin material to form a coating film, and then melting the thin material of the resultant laminate to laminate the coating film on at least one surface of the base material.

In addition, the flame-retardant composite material of the present invention can be produced by, for example, applying the silicone resin composition (C) containing at least the inorganic oxide particle-containing condensation-reactive silicone resin onto a thin material to form a coating film, forming an adhesive layer or a pressure-sensitive adhesive layer on the surface of the thin material on a side opposite to the coating film by application or the like, and then laminating the resultant laminate on at least one surface of the base material.

In addition, the flame-retardant composite material of the present invention can be produced by, for example, laminating the base material and the silicone resin composition, and then forming the laminate into a specific shape. Any appropriate method such as bending, press molding, vacuum forming, or pressure forming can be utilized as a method for the forming.

In addition, the flame-retardant composite material of the present invention can be produced by, for example, forming the base material into a specific shape and then laminating the silicone resin composition that has been turned into a coating film. Any appropriate method such as laminate molding, press molding, vacuum forming, or pressure forming can be utilized as a method for the lamination.

In addition, the flame-retardant composite material of the present invention can be produced by, for example, simultaneously performing the step of forming the base material into a specific shape and the step of laminating the silicone resin composition. Any appropriate method such as in-mold molding or insert molding can be utilized as a method for the forming.

The flame-retardant composite material of the present invention may include a protective layer on its surface on a side closer to the coating film formed of the silicone resin composition (C).

A main component for the protective layer is preferably a polymer. The protective layer is preferably, for example, at least one selected from the group consisting of an ultraviolet light-curable hard coat layer, a thermosetting hard coat layer, and an organic-inorganic hybrid hard coat layer. Such protective layer may be formed only of one layer, or may be formed of two or more layers.

The ultraviolet light-curable hard coat layer can be formed of a resin composition containing an ultraviolet light-curable resin. The thermosetting hard coat layer can be formed of a resin composition containing a thermosetting resin. The organic-inorganic hybrid hard coat layer can be formed of a resin composition containing an organic-inorganic hybrid resin.

More specific examples of curable compounds to be used for the above-mentioned resins include a monomer, an oligomer, a polymer, and a silazane compound each having at least one kind selected from the group consisting of a silanol group, a precursor of a silanol group (for example, an alkoxysilyl group or a chlorosilyl group), an acryloyl group, a methacryloyl group, a cyclic ether group, an amino group, and an isocyanate group. Of those, a monomer, an oligomer, or a polymer having a silanol group is preferred from the viewpoint that its surface hardly carbonizes at the time of its combustion.

The resin composition that can form the hard coat layer may further contain any appropriate additive depending on purposes. Examples of such additive include a photoinitiator, a silane coupling agent, a release agent, a curing agent, a curing accelerator, a diluent, an antiaging agent, a denaturant, a surfactant, a dye, a pigment, a discoloration inhibitor, an ultraviolet absorber, a softener, a stabilizer, a plasticizer, and an antifoaming agent. The kinds, the number, and the amounts of the additives contained in the resin composition that can form the hard coat layer may be set as appropriate depending on purposes.

Any appropriate thickness can be adopted as the thickness of the protective layer to the extent that the effects of the present invention are not impaired. Such thickness is preferably from 0.1 µm to 200 µm, more preferably from 0.2 µm to 100 µm, still more preferably from 0. 5 µm to 50 µm. When the thickness of the protective layer falls within the range, the layer can express excellent scratch resistance without impairing the flame retardancy of the flame-retardant composite material of the present invention.

Any appropriate thickness can be adopted as the thickness of the flame-retardant composite material of the present invention depending on applications. An upper limit for such thickness is preferably 6, 000 µm, more preferably 5, 000 µm, still more preferably 4,000 µm, particularly preferably 3,000 µm, and a lower limit for the thickness is preferably 50 µm, more preferably 90 µm, still more preferably 120 µm, particularly preferably 170 µm.

The flame-retardant composite material of the present invention has excellent flame retardancy and preferably has incombustibility. For example, the material hardly allows fire to spread or does not allow the fire to spread in a test in conformity with the combustion test of Japan Railway Rolling Stock & Machinery Association (general material; the 45° ethyl alcohol test of a railway rolling stock nonmetallic material). In addition, the surface of the material preferably shows no carbonization. It should be noted that the term "incombustibility" as used herein means the characteristic by which the surface of the material neither ignites nor carbonizes in the combustion test.

The flame-retardant composite material of the present invention has excellent flame retardancy, and preferably has a low calorific value and a low heat generation rate. For example, even in a test in conformity with the cone calorimeter test of Japan Railway Rolling Stock & Machinery Association (ceiling material; ISO 5660-1), the calorific value and maximum heat generation rate of the material can be reduced, and its ignition time can be delayed. The material preferably has a gross calorific value per 10 minutes of 30 MJ/m² or less, a maximum heat generation rate of 300 kW/m² or less, and an ignition time of 60 seconds or more.

The flame-retardant composite material of the present invention can be utilized as an interior material for transporting machines such as a railway rolling stock, an aircraft, an automobile, a ship, an elevator, and an escalator (transporting machine interior material), a building material, a display material, a home appliance material, or an electronic circuit material because the material is excellent in flame retardancy. In addition, the material can be suitably utilized as a lighting cover, in particular, a lighting cover serving as a transporting machine interior material.

The flame-retardant composite material of the present invention can be used as a material deformed from a plate-shaped product by thermoforming as well. Any appropriate method such as bending, press molding, vacuum forming, or pressure forming can be utilized as a method for the thermoforming of the plate-shaped product.

A functional layer such as an antifouling layer, an antistatic layer, a light-diffusing layer, an antireflection layer, an ultraviolet light-absorbing layer, a heat-shielding layer, a heat-insulating layer, a thermally-conductive layer, or a solvent-resistant layer can be provided to the flame-retardant composite material of the present invention, as long as the flame retardancyis not impaired.

The flame-retardant composite material of the present invention may contain any appropriate other component in the plastic-based base material containing the inorganic compound or the coating film, as long as the flame retardancy is not impaired. Such other components may be used alone or in combination.

Examples of the other component include another polymer component, a softener, an antioxidant, an antiaging agent, a curing agent, aplasticizer, a filler, a thermal initiator, a photoinitiator, an ultraviolet absorber, a photostabilizer, a colorant (a pigment, a dye, or the like), a solvent (an organic solvent), and a surfactant (such as an ionic surfactant, a silicone-based surfactant, or a fluorine-based surfactant).

A lighting apparatus of the present invention is a lighting apparatus using the flame-retardant composite material of the present invention, the apparatus including at least a light source for generating light to be used in lighting, and a lighting cover arranged to cover the light source and including the flame-retardant composite material, in which the light from the light source is transmitted by the flame-retardant composite material to be output.

In the lighting apparatus, any appropriate method and arrangement can be adopted as, for example, the manner in which the lighting cover is attached and the arrangement of the lighting cover.

### Examples

Now, the present invention is more specifically described by way of Examples and Comparative Examples. However, the present invention is by no means limited thereto. It should be noted that, in the following description, "part (s) " and "%" are by weight unless otherwise specified.

### [Synthesis Example 1]

50 Grams of a colloidal silica solution having an average particle diameter of from 8 nm to 11 nm (trade name: SNOWTEX OS, manufactured by Nissan Chemical Industries, Ltd., solid content concentration: 20%) and 84 g of 2-propanol were loaded into a container including a stirring machine, a reflux condenser, and a nitrogen-introducing tube. Concentrated nitric acid was added to adjust the acidity (pH) of the resultant liquid to the range of from 2 to 4. Next, the temperature of the mixture was increased to 70°C, and then a liquid prepared by dissolving 25 g of a silsesquioxane compound having a reactive methoxysilyl group at a molecular terminal thereof (trade name: X-40-9225, manufactured by Shin-Etsu Chemical Co., Ltd., methoxy content: 24%) in 25 g of 2-propanol was dropped to the mixture with a dropping funnel over 1.25 hours to perform a reaction between the silsesquioxane compound and a colloidal silica particle surface.

Next, a liquid prepared by dissolving 75 g of a polysiloxane compound derived from a trifunctional alkoxysilane and a bifunctional alkoxysilane, the polysiloxane compound having a reactive methoxysilyl group at a molecular terminal thereof (trade name: X-40-9246, manufactured by Shin-Etsu Chemical Co., Ltd., methoxy content: 12%) in 75 g of 2-propanol was dropped to the resultant over 3.75 hours to perform a reaction with the silsesquioxane compound on the colloidal silica. The resultant was heated and stirred at 70°C for 1 hour, and was then cooled to room temperature (25°C) to provide a transparent resin composition solution (A).

### [Synthesis Example 2]

50 Grams of a colloidal silica solution having an average particle diameter of from 8 nm to 11 nm (trade name: SNOWTEX OS, manufactured by Nissan Chemical Industries, Ltd., solid content concentration: 20%) and 84 g of 2-propanol were loaded into a container including a stirring machine, a reflux condenser, and a nitrogen-introducing tube. Concentrated nitric acid was added to adjust the acidity (pH) of the resultant liquid to the range of from 2 to 4. Next, the temperature of the mixture was increased to 70°C, and then a liquid prepared by dissolving 10 g of a silsesquioxane compound having a reactive methoxysilyl group at a molecular terminal thereof (trade name: X-40-9225, manufactured by Shin-Etsu Chemical Co., Ltd., methoxy content: 24%) in 10 g of 2-propanol was dropped to the mixture with a dropping funnel over 0.5 hour to perform a reaction between the silsesquioxane compound and a colloidal silica particle surface.

Next, a liquid prepared by dissolving 90 g of a polysiloxane compound derived from a trifunctional alkoxysilane and a bifunctional alkoxysilane, the polysiloxane compound having a reactive methoxysilyl group at a molecular terminal thereof (trade name: X-40-9246, manufactured by Shin-Etsu Chemical Co., Ltd., methoxy content: 12%) in 90 g of 2-propanol was dropped to the resultant over 4. 5 hours to perform a reaction with the silsesquioxane compound on the colloidal silica. The resultant was heated and stirred at 70°C for 1 hour, and was then cooled to room temperature (25°C) to provide a transparent resin composition solution (B).

### [Synthesis Example 3]

50 Grams of a colloidal silica solution having an average particle diameter of from 8 nm to 11 nm (trade name: SNOWTEX OS, manufactured by Nissan Chemical Industries, Ltd., solid content concentration: 20%) and 84 g of 2-propanol were loaded into a container including a stirring machine, a reflux condenser, and a nitrogen-introducing tube. Concentrated nitric acid was added to adjust the acidity (pH) of the resultant liquid to the range of from 2 to 4. Next, the temperature of the mixture was increased to 70°C, and then a liquid prepared by dissolving 4 g of a silsesquioxane compound having a reactive methoxysilyl group at a molecular terminal thereof (trade name: X-40-9225, manufactured by Shin-Etsu Chemical Co., Ltd., methoxy content: 24%) in 4 g of 2-propanol was dropped to the mixture with a dropping funnel over 0.2 hour to perform a reaction between the silsesquioxane compound and a colloidal silica particle surface.

Next, a liquid prepared by dissolving 96 g of a polysiloxane compound derived from a trifunctional alkoxysilane and a bifunctional alkoxysilane, the polysiloxane compound having a reactive methoxysilyl group at a molecular terminal thereof (trade name: X-40-9246, manufactured by Shin-Etsu Chemical Co., Ltd., methoxy content: 12%) in 96 g of 2-propanol was dropped to the resultant over 4 . 8 hours to perform a reaction with the silsesquioxane compound on the colloidal silica. The resultant was heated and stirred at 70°C for 1 hour, and was then cooled to room temperature (25°C) to provide a transparent resin composition solution (C).

### [Synthesis Example 4]

50 Grams of a colloidal silica solution having an average particle diameter of from 8 nm to 11 nm (trade name: SNOWTEX OS, manufactured by Nissan Chemical Industries, Ltd., solid content concentration: 20%) and 84 g of 2-propanol were loaded into a container including a stirring machine, a reflux condenser, and a nitrogen-introducing tube. Concentrated nitric acid was added to adjust the acidity (pH) of the resultant liquid to the range of from 2 to 4. Next, the temperature of the mixture was increased to 70°C, and then a liquid prepared by dissolving 100 g of a polysiloxane compound derived from a trifunctional alkoxysilane and a bifunctional alkoxysilane, the polysiloxane compound having a reactive methoxysilyl group at a molecular terminal thereof (trade name: X-40-9246, manufactured by Shin-Etsu Chemical Co., Ltd., methoxy content: 12%) in 100 g of 2-propanol was dropped to the mixture over 5 hours to perform a reaction with the silsesquioxane compound on the colloidal silica. The resultant was heated and stirred at 70°C for 1 hour, and was then cooled to room temperature (25°C) to provide a transparent resin composition solution (D).

### [Synthesis Example 5]

75 Grams of a colloidal silica solution having an average particle diameter of from 8 nm to 11 nm (trade name: SNOWTEX OS, manufactured by Nissan Chemical Industries, Ltd., solid content concentration: 20%) and 125 g of 2-propanol were loaded into a container including a stirring machine, a reflux condenser, and a nitrogen-introducing tube. Concentrated nitric acid was added to adjust the acidity (pH) of the resultant liquid to the range of from 2 to 4. Next, the temperature of the mixture was increased to 70°C, and then a liquid prepared by dissolving 10 g of a silsesquioxane compound having a reactive methoxysilyl group at a molecular terminal thereof (trade name: X-40-9225, manufactured by Shin-Etsu Chemical Co., Ltd., methoxy content: 24%) in 10 g of 2-propanol was dropped to the mixture with a dropping funnel over 0.5 hour to perform a reaction between the silsesquioxane compound and a colloidal silica particle surface.

Next, a liquid prepared by dissolving 90 g of a polysiloxane compound derived from a trifunctional alkoxysilane and a bifunctional alkoxysilane, the polysiloxane compound having a reactive methoxysilyl group at a molecular terminal thereof (trade name: X-40-9246, manufactured by Shin-Etsu Chemical Co., Ltd., methoxy content: 12%) in 90 g of 2-propanol was dropped to the resultant over 4. 5 hours to perform a reaction with the silsesquioxane compound on the colloidal silica. The resultant was heated and stirred at 70°C for 1 hour, and was then cooled to room temperature (25°C) to provide a transparent resin composition solution (E).

### [Synthesis Example 6]

75 Grams of a colloidal silica solution having an average particle diameter of from 8 nm to 11 nm (trade name: SNOWTEX OS, manufactured by Nissan Chemical Industries, Ltd., solid content concentration: 20%) and 125 g of 2-propanol were loaded into a container including a stirring machine, a reflux condenser, and a nitrogen-introducing tube. Concentrated nitric acid was added to adjust the acidity (pH) of the resultant liquid to the range of from 2 to 4. Next, the temperature of the mixture was increased to 70°C, and then a liquid prepared by dissolving 4 g of a silsesquioxane compound having a reactive methoxysilyl group at a molecular terminal thereof (trade name: X-40-9225, manufactured by Shin-Etsu Chemical Co., Ltd., methoxy content: 24%) in 4 g of 2-propanol was dropped to the mixture with a dropping funnel over 0.2 hour to perform a reaction between the silsesquioxane compound and a colloidal silica particle surface.

Next, a liquid prepared by dissolving 96 g of a polysiloxane compound derived from a trifunctional alkoxysilane and a bifunctional alkoxysilane, the polysiloxane compound having a reactive methoxysilyl group at a molecular terminal thereof (trade name: X-40-9246, manufactured by Shin-Etsu Chemical Co., Ltd., methoxy content: 12%) in 96 g of 2-propanol was dropped to the resultant over 4 . 8 hours to perform a reaction with the silsesquioxane compound on the colloidal silica. The resultant was heated and stirred at 70°C for 1 hour, and was then cooled to room temperature (25°C) to provide a transparent resin composition solution (F).

### [Synthesis Example 7]

75 Grams of a colloidal silica solution having an average particle diameter of from 8 nm to 11 nm (trade name: SNOWTEX OS, manufactured by Nissan Chemical Industries, Ltd., solid content concentration: 20%) and 125 g of 2-propanol were loaded into a container including a stirring machine, a reflux condenser, and a nitrogen-introducing tube. Concentrated nitric acid was added to adjust the acidity (pH) of the resultant liquid to the range of from 2 to 4. Next, the temperature of the mixture was increased to 70°C, and then a liquid prepared by dissolving 100 g of a polysiloxane compound derived from a trifunctional alkoxysilane and a bifunctional alkoxysilane, the polysiloxane compound having a reactive methoxysilyl group at a molecular terminal thereof (trade name: X-40-9246, manufactured by Shin-Etsu Chemical Co., Ltd., methoxy content: 12%) in 100 g of 2-propanol was dropped to the mixture over 5 hours to perform a reaction with the silsesquioxane compound on the colloidal silica. The resultant was heated and stirred at 70°C for 1 hour, and was then cooled to room temperature (25°C) to provide a transparent resin composition solution (G).

### [Synthesis Example 8]

50 Grams of a colloidal silica solution having an average particle diameter of from 8 nm to 11 nm (trade name: SNOWTEX OS, manufactured by Nissan Chemical Industries, Ltd., solid content concentration: 20%) and 84 g of 2-propanol were loaded into a container including a stirring machine, a reflux condenser, and a nitrogen-introducing tube. Concentrated nitric acid was added to adjust the acidity (pH) of the resultant liquid to the range of from 2 to 4. Next, the temperature of the mixture was increased to 70°C, and then a liquid prepared by dissolving 25 g of a silsesquioxane compound having a reactive methoxysilyl group at a molecular terminal thereof (trade name: X-40-9225, manufactured by Shin-Etsu Chemical Co., Ltd., methoxy content: 24%) in 25 g of 2-propanol was dropped to the mixture with a dropping funnel over 1.25 hours to perform a reaction between the silsesquioxane compound and a colloidal silica particle surface.

Next, a liquid prepared by dissolving 50 g of a polysiloxane compound derived from a trifunctional alkoxysilane and a bifunctional alkoxysilane, the polysiloxane compound having a reactive methoxysilyl group at a molecular terminal thereof (trade name: X-40-9246, manufactured by Shin-Etsu Chemical Co., Ltd., methoxy content: 12%), and 25 g of a polysiloxane compound having a phenyl group in its molecular chain (trade name: X-40-9227, manufactured by Shin-Etsu Chemical Co. , Ltd. , methoxy content: 15%) in 75 g of 2-propanol was dropped to the resultant over 3.75 hours to perform a reaction with the silsesquioxane compound on the colloidal silica. The resultant was heated and stirred at 70°C for 1 hour, and was then cooled to room temperature (25°C) to provide a transparent resin composition solution (H).

### [Synthesis Example 9]

An undercoating agent composition solution A was obtained by stirring and mixing 3 parts by weight of aminopropyltrimethoxysilane (trade name: KBM-903, manufactured by Shin-Etsu Chemical Co., Ltd.) with 97 parts by weight of 2-propanol.

### [Synthesis Example 10]

A hard coat agent composition solution A was obtained by stirring and mixing 100 parts by weight of a thermosetting hard coat agent (trade name: EVERHARD 100, manufactured by Ohashi Chemical Industries Ltd.) with 287 parts by weight of 2-propanol and 5 parts by weight of an aluminum-based catalyst (trade name: CAT-AC, manufactured by Shin-Etsu Chemical Co., Ltd.).

### [Synthesis Example 1A]

Glass frits (trade name: VY0053M, manufactured by Nippon Frit Co., Ltd.) and propylene glycol monomethyl ether (manufactured by Wako Pure Chemical Industries, Ltd.) were added to the transparent resin composition solution (A) produced in Synthesis Example 1 in amounts of 200 parts by weight and 100 parts by weight, respectively with respect to 100 parts by weight of a solid content in the transparent resin composition solution, and the mixture was concentrated until its solid content concentration became 90 wt%. After that, the concentrate was mixed and stirred with 10 parts by weight of a phosphoric acid-based catalyst (trade name: X-40-2309A, manufactured by Shin-Etsu Chemical Co., Ltd.). Thus, a silicone resin composition A-1 was obtained.

### [Synthesis Example 1B]

Glass frits (trade name: VY0053M, manufactured by Nippon Frit Co., Ltd.) and propylene glycol monomethyl ether (manufactured by Wako Pure Chemical Industries, Ltd.) were added to the transparent resin composition solution (A) produced in Synthesis Example 1 in amounts of 150 parts by weight and 100 parts by weight, respectively with respect to 100 parts by weight of a solid content in the transparent resin composition solution, and the mixture was concentrated until its solid content concentration became 88 wt%. After that, the concentrate was mixed and stirred with 10 parts by weight of a phosphoric acid-based catalyst (trade name: X-40-2309A, manufactured by Shin-Etsu Chemical Co., Ltd.). Thus, a silicone resin composition A-2 was obtained.

### [Synthesis Example 2A]

A silicone resin composition B-1 was obtained in the same manner as in Synthesis Example 1A except that the transparent resin composition solution (B) produced in Synthesis Example 2 was used instead of the transparent resin composition solution (A) produced in Synthesis Example 1.

### [Synthesis Example 2B]

A silicone resin composition B-2 was obtained in the same manner as in Synthesis Example 1B except that the transparent resin composition solution (B) produced in Synthesis Example 2 was used instead of the transparent resin composition solution (A) produced in Synthesis Example 1.

### [Synthesis Example 3A]

A silicone resin composition C-1 was obtained in the same manner as in Synthesis Example 1A except that the transparent resin composition solution (C) produced in Synthesis Example 3 was used instead of the transparent resin composition solution (A) produced in Synthesis Example 1.

### [Synthesis Example 3B]

A silicone resin composition C-2 was obtained in the same manner as in Synthesis Example 1B except that the transparent resin composition solution (C) produced in Synthesis Example 3 was used instead of the transparent resin composition solution (A) produced in Synthesis Example 1.

### [Synthesis Example 4A]

A silicone resin composition D-1 was obtained in the same manner as in Synthesis Example 1A except that the transparent resin composition solution (D) produced in Synthesis Example 4 was used instead of the transparent resin composition solution (A) produced in Synthesis Example 1.

### [Synthesis Example 4B]

A silicone resin composition D-2 was obtained in the same manner as in Synthesis Example 1B except that the transparent resin composition solution (D) produced in Synthesis Example 4 was used instead of the transparent resin composition solution (A) produced in Synthesis Example 1.

### [Synthesis Example 5A]

A silicone resin composition E-1 was obtained in the same manner as in Synthesis Example 1A except that the transparent resin composition solution (E) produced in Synthesis Example 5 was used instead of the transparent resin composition solution (A) produced in Synthesis Example 1.

### [Synthesis Example 5B]

A silicone resin composition E-2 was obtained in the same manner as in Synthesis Example 1B except that the transparent resin composition solution (E) produced in Synthesis Example 5 was used instead of the transparent resin composition solution (A) produced in Synthesis Example 1.

### [Synthesis Example 6A]

A silicone resin composition F-1 was obtained in the same manner as in Synthesis Example 1A except that the transparent resin composition solution (F) produced in Synthesis Example 6 was used instead of the transparent resin composition solution (A) produced in Synthesis Example 1.

### [Synthesis Example 6B]

A silicone resin composition F-2 was obtained in the same manner as in Synthesis Example 1B except that the transparent resin composition solution (F) produced in Synthesis Example 6 was used instead of the transparent resin composition solution (A) produced in Synthesis Example 1.

### [Synthesis Example 7A]

A silicone resin composition G-1 was obtained in the same manner as in Synthesis Example 1A except that the transparent resin composition solution (G) produced in Synthesis Example 7 was used instead of the transparent resin composition solution (A) produced in Synthesis Example 1.

### [Synthesis Example 7B]

A silicone resin composition G-2 was obtained in the same manner as in Synthesis Example 1B except that the transparent resin composition solution (G) produced in Synthesis Example 7 was used instead of the transparent resin composition solution (A) produced in Synthesis Example 1.

### [Synthesis Example 8A]

A silicone resin composition H-1 was obtained in the same manner as in Synthesis Example 1A except that the transparent resin composition solution (H) produced in Synthesis Example 8 was used instead of the transparent resin composition solution (A) produced in Synthesis Example 1.

### [Synthesis Example 8B]

A silicone resin composition H-2 was obtained in the same manner as in Synthesis Example 1B except that the transparent resin composition solution (H) produced in Synthesis Example 8 was used instead of the transparent resin composition solution (A) produced in Synthesis Example 1.

### [Example 1]

The undercoating agent composition solution A obtained in Synthesis Example 9 was applied onto a glass fiber-reinforced polycarbonate plate (thickness: 1, 300 µm), which had been produced by subjecting a glass fiber-reinforced polycarbonate resin (glass fiber content: 30 wt%, trade name: TARFLON G1930T, manufactured by Idemitsu Kosan Co. , Ltd.) to vacuum pressing with a vacuum pressing machine at a pressure of 0.4 MPa and 220°C, with a Meyer bar so that its thickness after drying became 1 µm. After that, the resultant was heated and dried with a hot air-circulating oven at 120°C for 3 minutes. Thus, a polycarbonate plate subjected to an undercoating treatment was obtained.

Next, the silicone resin composition A-1 obtained in Synthesis Example 1A was applied onto the polycarbonate plate subjected to the undercoating treatment with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant composite material (1) was obtained.

### [Examples 2 to 14]

Flame-retardant composite materials (2) to (14) were each obtained in the same manner as in Example 1 except that the silicone resin composition A-1 obtained in Synthesis Example 1A was changed as shown in Table 1.

**[Table 1]**

| | Silicone resin composition |
|---|---|
| Example 1 | A-1 |
| Example 2 | B-1 |
| Example 3 | C-1 |
| Example 4 | D-1 |
| Example 5 | E-1 |
| Example 6 | F-1 |
| Example 7 | G-1 |
| Example 8 | H-1 |
| Example 9 | B-2 |
| Example 10 | C-2 |
| Example 11 | D-2 |
| Example 12 | E-2 |
| Example 13 | F-2 |
| Example 14 | G-2 |

### [Example 15]

The undercoating agent composition solution A obtained in Synthesis Example 9 was applied onto a glass fiber-reinforced polycarbonate plate (thickness: 1,300 µm), which had been produced by subjecting a glass fiber-reinforced polycarbonate resin (glass fiber content: 30 wt%, trade name: TARFLON G1930T, manufactured by Idemitsu Kosan Co. , Ltd.) to vacuum pressing with a vacuum pressing machine at a pressure of 0.4 MPa and 220°C, with a Meyer bar so that its thickness after drying became 1 µm. After that, the resultant was heated and dried with a hot air-circulating oven at 120°C for 3 minutes. Thus, a polycarbonate plate subjected to an undercoating treatment was obtained.

Next, the silicone resin composition B-2 obtained in Synthesis Example 2B was applied onto the polycarbonate plate subjected to the undercoating treatment with an applicator manufactured by Tester Sangyo Co., Ltd. so that its thickness after drying became 250 µm. After that, the resultant was heated and dried with a hot air-circulating oven at 100°C for 3 minutes, at 140°C for 6 minutes, and at 170°C for 60 minutes. Thus, a flame-retardant composite material (15) was obtained.

### [Examples 16 to 20]

Flame-retardant composite materials (16) to (20) were each obtained in the same manner as in Example 15 except that the silicone resin composition B-2 obtained in Synthesis Example 2B was changed as shown in Table 2.

**[Table 2]**

| | Silicone resin composition |
|---|---|
| Examples 15, 21, 27, 33, 39, 45, 51, 57, 63, 69, 75 | B-2 |
| Examples 16, 22, 28, 34, 40, 46, 52, 58, 64, 70, 76 | C-2 |
| Examples 17, 23, 29, 35, 41, 47, 53, 59, 65, 71, 77 | D-2 |
| Examples 18, 24, 30, 36, 42, 48, 54, 60, 66, 72, 78 | E-2 |
| Examples 19, 25, 31, 37, 43, 49, 55, 61, 67, 73, 79 | F-2 |
| Examples 20, 26, 32, 38, 44, 50, 56, 62, 68, 74, 80 | G-2 |

### [Example 21]

The undercoating agent composition solution A obtained in Synthesis Example 9 was applied onto a glass fiber-reinforced polycarbonate plate (thickness: 1, 300 µm), which had been produced by subjecting a glass fiber-reinforced polycarbonate resin (glass fiber content: 10 wt%, trade name: TARFLON G1910T, manufactured by Idemitsu Kosan Co. , Ltd.) to vacuum pressing with a vacuum pressing machine at a pressure of 0.4 MPa and 220°C, with a Meyer bar so that its thickness after drying became 1 µm. After that, the resultant was heated and dried with a hot air-circulating oven at 120°C for 3 minutes. Thus, a polycarbonate plate subjected to an undercoating treatment was obtained.

Next, the silicone resin composition B-2 obtained in Synthesis Example 2B was applied onto the polycarbonate plate subjected to the undercoating treatment with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant composite material (21) was obtained.

### [Examples 22 to 26]

Flame-retardant composite materials (22) to (26) were each obtained in the same manner as in Example 21 except that the silicone resin composition B-2 obtained in Synthesis Example 2B was changed as shown in Table 2.

### [Example 27]

The undercoating agent composition solution A obtained in Synthesis Example 9 was applied onto a glass fiber-reinforced polycarbonate plate (thickness: 1, 300 µm), which had been produced by subjecting a glass fiber-reinforced polycarbonate resin (glass fiber content: 30 wt%, trade name: SF5303, manufactured by Sumika Styron Polycarbonate Limited) to vacuum pressing with a vacuum pressing machine at a pressure of 0.4 MPa and 220°C, with a Meyer bar so that its thickness after drying became 1 µm. After that, the resultant was heated and dried with a hot air-circulating oven at 120°C for 3 minutes. Thus, a polycarbonate plate subjected to an undercoating treatment was obtained.

Next, the silicone resin composition B-2 obtained in Synthesis Example 2B was applied onto the polycarbonate plate subjected to the undercoating treatment with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant composite material (27) was obtained.

### [Examples 28 to 32]

Flame-retardant composite materials (28) to (32) were each obtained in the same manner as in Example 27 except that the silicone resin composition B-2 obtained in Synthesis Example 2B was changed as shown in Table 2.

### [Example 33]

A polyester-based hot-melt adhesive (trade name: "PES-314SX30", solid content concentration: 30 wt%, manufactured by Toagosei Co. , Ltd.) was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 2 µm. After that, the resultant was heated and dried with a hot air-circulating oven at 100°C for 2 minutes and at 110°C for 2 minutes. Thus, an adhesive sheet was obtained.

Next, the silicone resin composition B-2 obtained in Synthesis Example 2B was applied onto the adhesive sheet with an applicator manufactured by Tester Sangyo Co. , Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant silicone resin-transferred sheet was obtained.

Next, the polyethylene terephthalate film subjected to the peeling treatment of the flame-retardant silicone resin-transferred sheet was peeled, and was bonded to a glass fiber-reinforced polycarbonate plate (thickness: 1,300 µm), which had been produced by subjecting a glass fiber-reinforced polycarbonate resin (glass fiber content: 30 wt%, trade name: SF5303, manufactured by Sumika Styron Polycarbonate Limited) to vacuum pressing with a vacuum pressing machine at a pressure of 0.4 MPa and 220°C, with a laminator at 0.5 m/min, a pressure of 0.2 MPa, and 140°C. Thus, a flame-retardant composite material (33) was obtained.

### [Examples 34 to 38]

Flame-retardant composite materials (34) to (38) were each obtained in the same manner as in Example 33 except that the silicone resin composition B-2 obtained in Synthesis Example 2B was changed as shown in Table 2.

### [Example 39]

A polyester-based hot-melt adhesive (trade name: "PES-314SX30", solid content concentration: 30 wt%, manufactured by Toagosei Co. , Ltd.) was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 10 µm. After that, the resultant was heated and dried with a hot air-circulating oven at 100°C for 2 minutes and at 110°C for 2 minutes. Thus, an adhesive sheet was obtained.

Next, the silicone resin composition B-2 obtained in Synthesis Example 2B was applied onto the adhesive sheet with an applicator manufactured by Tester Sangyo Co. , Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant silicone resin-transferred sheet was obtained.

Next, the polyethylene terephthalate film subjected to the peeling treatment of the flame-retardant silicone resin-transferred sheet was peeled, and was bonded to a glass fiber-reinforced polycarbonate plate (thickness: 1,300 µm), which had been produced by subjecting a glass fiber-reinforced polycarbonate resin (glass fiber content: 30 wt%, trade name: SF5303, manufactured by Sumika Styron Polycarbonate Limited) to vacuum pressing with a vacuum pressing machine at a pressure of 0. 4 MPa and 220°C, with a laminator at 0.5 m/min, a pressure of 0.2 MPa, and 140°C. Thus, a flame-retardant composite material (39) was obtained.

### [Examples 40 to 44]

Flame-retardant composite materials (40) to (44) were each obtained in the same manner as in Example 39 except that the silicone resin composition B-2 obtained in Synthesis Example 2B was changed as shown in Table 2.

### [Example 45]

The silicone resin composition B-2 obtained in Synthesis Example 2B was applied onto a polyethylene terephthalate (PET) film (thickness: 12 µm, trade name: LUMIRROR S10, manufactured by Toray Industries, Inc.) with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant silicone resin sheet was obtained.

Next, a polyester-based hot-melt adhesive (trade name: PES-314SX30, solid content concentration: 30 wt%, manufactured by Toagosei Co., Ltd.) was applied onto the PET film surface of the flame-retardant silicone resin sheet with an applicator manufactured by Tester Sangyo Co. , Ltd. so that its thickness after drying became 10 µm. After that, the resultant was heated and dried with a hot air-circulating oven at 100 °C for 2 minutes and at 110 °C for 2 minutes. Thus, a flame-retardant silicone resin-transferred sheet was obtained.

Next, the surface of the flame-retardant silicone resin-transferred sheet having applied thereto the adhesive was bonded to a glass fiber-reinforced polycarbonate plate (thickness: 1,300 µm), which had been produced by subjecting a glass fiber-reinforced polycarbonate resin (glass fiber content: 30 wt%, trade name: SF5303, manufactured by Sumika Styron Polycarbonate Limited) to vacuum pressing with a vacuum pressing machine at a pressure of 0.4 MPa and 220°C, with a laminator at 0.5 m/min, a pressure of 0.2 MPa, and 140°C. Thus, a flame-retardant composite material (45) was obtained.

### [Examples 46 to 50]

Flame-retardant composite materials (46) to (50) were each obtained in the same manner as in Example 45 except that the silicone resin composition B-2 obtained in Synthesis Example 2B was changed as shown in Table 2.

### [Example 51]

The silicone resin composition B-2 obtained in Synthesis Example 2B was applied onto a polyethylene terephthalate (PET) film (thickness: 38 µm, trade name: LUMIRROR S10, manufactured by Toray Industries, Inc.) with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant silicone resin sheet was obtained.

Next, a polyester-based hot-melt adhesive (trade name: PES-314SX30, solid content concentration: 30 wt%, manufactured by Toagosei Co., Ltd.) was applied onto the PET film surface of the f lame-retardant silicone resin sheet with an applicator manufactured by Tester Sangyo Co. , Ltd. so that its thickness after drying became 10 µm. After that, the resultant was heated and dried with a hot air-circulating oven at 100 °C for 2 minutes and at 110°C for 2 minutes. Thus, a flame-retardant silicone resin-transferred sheet was obtained.

Next, the surface of the flame-retardant silicone resin-transferred sheet having applied thereto the adhesive was bonded to a glass fiber-reinforced polycarbonate plate (thickness: 1,300 µm), which had been produced by subjecting a glass fiber-reinforced polycarbonate resin (glass fiber content: 30 wt%, trade name: SF5303, manufactured by Sumika Styron Polycarbonate Limited) to vacuum pressing with a vacuum pressing machine at a pressure of 0.4 MPa and 220°C, with a laminator at 0.5 m/min, a pressure of 0.2 MPa, and 140°C. Thus, a flame-retardant composite material (51) was obtained.

### [Examples 52 to 56]

Flame-retardant composite materials (52) to (56) were each obtained in the same manner as in Example 51 except that the silicone resin composition B-2 obtained in Synthesis Example 2B was changed as shown in Table 2.

### [Example 57]

The silicone resin composition B-2 obtained in Synthesis Example 2B was applied onto a polycarbonate (PC) film (thickness: 100 µm, trade name: Panlite Film D-100, manufactured by Teijin Limited) with an applicator manufactured by Tester Sangyo Co. , Ltd. so that its thickness after drying became 150 µm. After that, the resultant was heated and dried with a hot air-circulating oven at 100°C for 3 minutes and at 140°C for 6 minutes. Thus, a flame-retardant silicone resin-transferred sheet was obtained.

Next, the PC film surface of the flame-retardant silicone resin-transferred sheet was bonded to a glass fiber-reinforced polycarbonate plate (thickness: 1, 300 µm), which had been produced by subjecting a glass fiber-reinforced polycarbonate resin (glass fiber content: 30 wt%, trade name: SF5303, manufactured by Sumika Styron Polycarbonate Limited) to vacuum pressing with a vacuum pressing machine at a pressure of 0.4 MPa and 220°C, with a laminator at 0.5 m/min and 160°C. Thus, a flame-retardant composite material (57) was obtained.

### [Examples 58 to 62]

Flame-retardant composite materials (58) to (62) were each obtained in the same manner as in Example 57 except that the silicone resin composition B-2 obtained in Synthesis Example 2B was changed as shown in Table 2.

### [Example 63]

The undercoating agent composition solution A obtained in Synthesis Example 9 was applied onto a glass fiber-reinforced polycarbonate plate (thickness: 1,300 µm), which had been produced by subjecting a glass fiber-reinforced polycarbonate resin (glass fiber content: 30 wt%, trade name: SF5303, manufactured by Sumika Styron Polycarbonate Limited) to vacuum pressing with a vacuum pressing machine at a pressure of 0.4 MPa and 220°C, with a Meyer bar so that its thickness after drying became 1 µm. After that, the resultant was heated and dried with a hot air-circulating oven at 120°C for 3 minutes. Thus, a polycarbonate plate subjected to an undercoating treatment was obtained.

Next, the silicone resin composition B-2 obtained in Synthesis Example 2B was applied onto the polycarbonate plate subjected to the undercoating treatment with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant composite plate was obtained.

Next, the hard coat agent composition solution A obtained in Synthesis Example 10 was applied onto the flame-retardant composite plate with a Meyer bar so that its thickness after drying became 2 µm. After that, the resultant was heated and dried with a hot air-circulating oven at 140°C for 3 minutes. Thus, a flame-retardant composite material (63) was obtained.

### [Examples 64 to 68]

Flame-retardant composite materials (64) to (68) were each obtained in the same manner as in Example 63 except that the silicone resin composition B-2 obtained in Synthesis Example 2B was changed as shown in Table 2.

### [Example 69]

The undercoating agent composition solution A obtained in Synthesis Example 9 was applied onto a glass fiber-reinforced polycarbonate plate (thickness: 1, 300 µm), which had been produced by subjecting a glass fiber-reinforced polycarbonate resin (glass fiber content: 30 wt%, trade name: SF5303, manufactured by Sumika Styron Polycarbonate Limited) to vacuum pressing with a vacuum pressing machine at a pressure of 0.4 MPa and 220°C, with a Meyer bar so that its thickness after drying became 1 µm. After that, the resultant was heated and dried with a hot air-circulating oven at 120°C for 3 minutes. Thus, a polycarbonate plate subjected to an undercoating treatment was obtained.

Next, the silicone resin composition B-2 obtained in Synthesis Example 2B was applied onto the polycarbonate plate subjected to the undercoating treatment with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant composite plate was obtained.

Next, an ultraviolet light-curable hard coat agent (trade name: 8KX-077, manufactured by Taisei Fine Chemical Co. , Ltd.) was applied onto the flame-retardant composite plate with a Meyer bar so that its thickness after drying became 2 µm. After that, the resultant was heated and dried with a hot air-circulating oven at 100°C for 3 minutes, and was subjected to a curing treatment by being irradiated with ultraviolet light (illuminance: 100 mW/cm², light quantity: 700 mJ/cm²) from a high-pressure mercury lamp. Thus, a flame-retardant composite material (69) was obtained.

### [Examples 70 to 74]

Flame-retardant composite materials (70) to (74) were each obtained in the same manner as in Example 69 except that the silicone resin composition B-2 obtained in Synthesis Example 2B was changed as shown in Table 2.

### [Example 75]

The silicone resin composition B-2 obtained in Synthesis Example 2B was applied onto a polyethylene terephthalate (PET) film (thickness: 38 µm, trade name: LUMIRROR S10, manufactured by Toray Industries, Inc.) with an applicator manufactured by Tester Sangyo Co., Ltd. so that its thickness after drying became 150 µm. After that, the resultant was heated and dried with a hot air-circulating oven at 100°C for 3 minutes, at 140°C for 6 minutes, and at 170°C for 60 minutes. Thus, a flame-retardant silicone resin sheet was obtained.

Next, the hard coat agent composition solution A obtained in Synthesis Example 10 was applied onto the flame-retardant silicone resin sheet with a Meyer bar so that its thickness after drying became 2 µm. After that, the resultant was heated and dried with a hot air-circulating oven at 140°C for 3 minutes. Thus, a scratch-resistant flame-retardant silicone resin sheet was obtained.

Next, a polyester-based hot-melt adhesive (trade name: PES-314SX30, solid content concentration: 30 wt%, manufactured by Toagosei Co., Ltd.) was applied onto the PET film surface of the scratch-resistant flame-retardant silicone resin sheet with an applicator manufactured by Tester Sangyo Co., Ltd. so that its thickness after drying became 10 µm. After that, the resultant was heated and dried with a hot air-circulating oven at 100°C for 2 minutes and at 110°C for 2 minutes. Thus, a flame-retardant silicone resin-transferred sheet was obtained.

Next, the surface of the flame-retardant silicone resin-transferred sheet having applied thereto the adhesive was bonded to a glass fiber-reinforced polycarbonate plate (thickness: 1,300 µm), which had been produced by subjecting a glass fiber-reinforced polycarbonate resin (glass fiber content: 30 wt%, trade name: SF5303, manufactured by Sumika Styron Polycarbonate Limited) to vacuum pressing with a vacuum pressing machine at a pressure of 0.4 MPa and 220°C, with a laminator at 0.5 m/min, a pressure of 0.2 MPa, and 140°C. Thus, a flame-retardant composite material (75) was obtained.

### [Examples 76 to 80]

Flame-retardant composite materials (76) to (80) were each obtained in the same manner as in Example 75 except that the silicone resin composition B-2 obtained in Synthesis Example 2B was changed as shown in Table 2.

### [Synthesis Example 11]

50 Grams of a colloidal silica solution having an average particle diameter of from 8 nm to 11 nm (trade name: SNOWTEX OS, manufactured by Nissan Chemical Industries, Ltd., solid content concentration: 20%) and 84 g of 2-propanol were loaded into a container including a stirring machine, a reflux condenser, and a nitrogen-introducing tube. Concentrated nitric acid was added to adjust the acidity (pH) of the resultant liquid to the range of from 2 to 4. Next, the temperature of the mixture was increased to 65°C, and then a liquid prepared by dissolving 25 g of a silsesquioxane compound having a reactive methoxysilyl group at a molecular terminal thereof (trade name: X-40-9225, manufactured by Shin-Etsu Chemical Co., Ltd., methoxy content: 24%) in 25 g of 2-propanol was dropped to the mixture with a dropping funnel over 2 hours to perform a reaction between the silsesquioxane compound and a colloidal silica particle surface.

Next, a liquid prepared by dissolving 75 g of a polysiloxane compound derived from a trifunctional alkoxysilane and a bifunctional alkoxysilane, the polysiloxane compound having a reactive methoxysilyl group at a molecular terminal thereof (trade name: X-40-9246, manufactured by Shin-Etsu Chemical Co., Ltd., methoxy content: 12%) in 75 g of 2-propanol was dropped to the resultant over 1 hour to perform a reaction with the silsesquioxane compound on the colloidal silica. The resultant was heated and stirred at 65°C for 1 hour, and was then cooled to room temperature (25°C) to provide a liquid transparent resin composition solution.

Glass frits (trade name: VY0053M, manufactured by Nippon Frit Co., Ltd.) and 2-methoxyethanol (manufactured by Wako Pure Chemical Industries, Ltd.) were added to the transparent resin composition solution in amounts of 200 parts by weight and 100 parts by weight, respectively with respect to 100 parts by weight of a solid content in the transparent resin composition solution, and the contents were stirred and mixed to provide a silicone resin composition X.

### [Synthesis Example 12]

An undercoating agent composition solution Y was obtained by stirring and mixing 3 parts by weight of aminopropyltrimethoxysilane (trade name: SILQUEST A-1110, manufactured by Momentive Performance Materials Inc.) with 77 parts by weight of 2-propanol and 20 parts by weight of butanol.

### [Example 81]

The undercoating agent composition solution Y obtained in Synthesis Example 12 was applied onto a glass fiber-reinforced polycarbonate plate (thickness: 1,300 µm), which had been produced by subjecting a glass fiber-reinforced polycarbonate resin (glass fiber content: 30 wt%, trade name: TARFLON G1930, manufactured by Idemitsu Kosan Co. , Ltd.) to vacuum pressing with a vacuum pressing machine at a pressure of 0.4 MPa and 220°C, with a Meyer bar so that its thickness after drying became 1 µm. After that, the resultant was heated and dried with a hot air-circulating oven at 120°C for 3 minutes. Thus, a polycarbonate plate subjected to an undercoating treatment was obtained.

Next, the silicone resin composition X obtained in Synthesis Example 11 was concentrated until its solid content concentration became 90 wt%. After that, the concentrate was applied onto the polycarbonate plate subjected to the undercoating treatment with an applicator manufactured by Tester Sangyo Co., Ltd. so that its thickness after drying became 250 µm. After that, the resultant was heated and dried with a hot air-circulating oven at 90°C for 60 minutes, at 130°C for 15 minutes, and at 170°C for 60 minutes. Thus, a flame-retardant composite material (81) was obtained.

### [Example 82]

The undercoating agent composition solution Y obtained in Synthesis Example 12 was applied onto a glass fiber-reinforced polycarbonate plate (thickness: 1,300 µm), which had been produced by subjecting a glass fiber-reinforced polycarbonate resin (glass fiber content: 30 wt%, trade name: TARFLON G1930, manufactured by Idemitsu Kosan Co. , Ltd.) to vacuum pressing with a vacuum pressing machine at a pressure of 0.4 MPa and 220°C, with a Meyer bar so that its thickness after drying became 1 µm. After that, the resultant was heated and dried with a hot air-circulating oven at 120°C for 3 minutes. Thus, a polycarbonate plate subjected to an undercoating treatment was obtained.

Next, the silicone resin composition X obtained in Synthesis Example 11 was concentrated until its solid content concentration became 90 wt%. After that, the concentrate was applied onto the polycarbonate plate subjected to the undercoating treatment with an applicator manufactured by Tester Sangyo Co., Ltd. so that its thickness after drying became 150 µm. After that, the resultant was heated and dried with a hot air-circulating oven at 90°C for 60 minutes, at 130°C for 15 minutes, and at 170°C for 60 minutes. Thus, a flame-retardant composite material (82) was obtained.

### [Example 83]

The undercoating agent composition solution Y obtained in Synthesis Example 12 was applied onto a glass fiber-reinforced polycarbonate plate (thickness: 1,300 µm), which had been produced by subjecting a glass fiber-reinforced polycarbonate resin (glass fiber content: 10 wt%, trade name: TARFLON G1910, manufactured by Idemitsu Kosan Co. , Ltd.) to vacuum pressing with a vacuum pressing machine at a pressure of 0.4 MPa and 220°C, with a Meyer bar so that its thickness after drying became 1 µm. After that, the resultant was heated and dried with a hot air-circulating oven at 120°C for 3 minutes. Thus, a polycarbonate plate subjected to an undercoating treatment was obtained.

Next, the silicone resin composition X obtained in Synthesis Example 11 was concentrated until its solid content concentration became 90 wt%. After that, the concentrate was applied onto the polycarbonate plate subjected to the undercoating treatment with an applicator manufactured by Tester Sangyo Co., Ltd. so that its thickness after drying became 150 µm. After that, the resultant was heated and dried with a hot air-circulating oven at 90°C for 60 minutes, at 130°C for 15 minutes, and at 170°C for 60 minutes. Thus, a flame-retardant composite material (83) was obtained.

### [Example 84]

A polyester-based hot-melt adhesive (trade name: "PES-314SX30", solid content concentration: 30 wt%, manufactured by Toagosei Co. , Ltd.) was applied onto a polyethylene terephthalate (PET) film subjected to a peeling treatment (thickness: 38 µm, trade name: MRF #38, manufactured by Mitsubishi Plastics, Inc.) with an applicator manufactured by Tester Sangyo Co., Ltd. so that its thickness after drying became 2 µm. After that, the resultant was heated and dried with a hot air-circulating oven at 100°C for 2 minutes and at 140°C for 2 minutes. Thus, an adhesive sheet was obtained.

Next, the silicone resin composition X obtained in Synthesis Example 11 was applied onto the adhesive sheet with an applicator manufactured by Tester Sangyo Co., Ltd. so that its thickness after drying became 150 µm. After that, the resultant was heated and dried with a hot air-circulating oven at 100°C for 2 minutes and at 140°C for 2 minutes. Thus, a flame-retardant silicone resin-transferred sheet was obtained.

Next, the polyethylene terephthalate film subjected to the peeling treatment of the flame-retardant silicone resin-transferred sheet was peeled, and was bonded to a glass fiber-reinforced polycarbonate plate (thickness: 1,300 µm), which had been produced by subjecting a glass fiber-reinforced polycarbonate resin (glass fiber content: 30 wt%, trade name: TARFLON G1930, manufactured by Idemitsu Kosan Co. , Ltd.) to vacuum pressing with a vacuum pressing machine at a pressure of 0.4 MPa and 220°C, with a laminator at 0.5m/min, a pressure of 0.2 MPa, and 140°C. Thus, a flame-retardant composite material (84) was obtained.

### [Comparative Example 1]

A glass fiber-reinforced polycarbonate plate (thickness: 1,300 µm), which had been produced by subjecting a glass fiber-reinforced polycarbonate resin (glass fiber content: 30 wt%, trade name: TARFLON G1930, manufactured by Idemitsu Kosan Co. , Ltd.) to vacuum pressing with a vacuum pressing machine at a pressure of 0.4 MPa and 220°C, was subjected to an evaluation alone.

### [Comparative Example 2]

A glass fiber-reinforced polycarbonate plate (thickness: 1,300 µm), which had been produced by subjecting a glass fiber-reinforced polycarbonate resin (glass fiber content: 10 wt%, trade name: TARFLON G1910, manufactured by Idemitsu Kosan Co. , Ltd.) to vacuum pressing with a vacuum pressing machine at a pressure of 0.4 MPa and 220°C, was subjected to an evaluation alone.

### «Evaluation»

The flame-retardant composite materials and the like obtained in Examples and Comparative Examples were subjected to the following evaluations. The results are shown in Table 3 to Table 7.

### (Combustion Test)

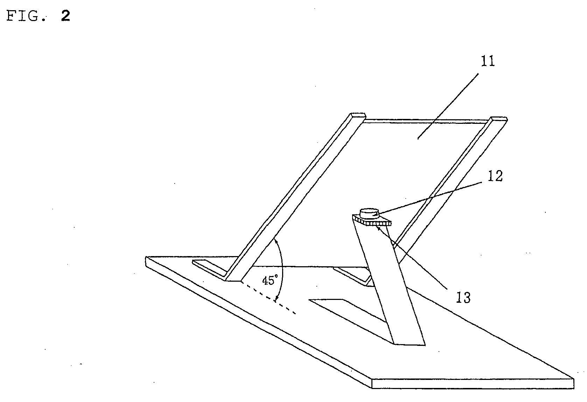

A combustion test was performed with a combustion test apparatus illustrated in FIG. 2 in conformity with the combustion test of Japan Railway Rolling Stock & Machinery Association (general material; the 45° ethyl alcohol test of a nonmetallic material for railway rolling stock).

In FIG. 2, reference numeral 11 represents a specimen (182 mm×257 mm), reference numeral 12 represents an alcohol container (made of iron, 17.5 ϕ×7.1, 0. 8 t), and reference numeral 13 represents a container holder (made of a material having a low thermal conductivity such as cork). A distance from the center of the lower surface of the specimen to the bottom surface of the container is 25.4 mm (1 inch).

The flame-retardant composite materials obtained in Examples and the plastic plates obtained in Comparative Examples were each held at a tilt of 45° as illustrated in FIG. 2. The fuel container (alcohol container) 12 was mounted on the cork base (container holder) 13 so that the center of the bottom of the fuel container 12 was placed at a position 25.4 mm vertically below the center of the lower surface of the specimen. 0. 5 Cubic centimeter of ethyl alcohol was loaded into the fuel container 12 and ignited, and the fuel was left to stand for about 2 minutes until the fuel burned off. The presence or absence of the ignition or carbonization of the sample was visually observed and evaluated by the following criteria.

### <Ignition and Carbonization>

○: The sample neither ignites nor carbonizes during the combustion of ethanol.
×: The sample ignites and carbonizes during the combustion of ethanol.

### <Penetration and Melt Dropping>

○: Flame does not penetrate the sample and the sample does not melt to drop within 1 minute from the initiation of the combustion of ethanol.
×: Flame penetrates the sample or the sample melts to drop within 1 minute from the initiation of the combustion of ethanol.

### (Cone Calorimeter Test)

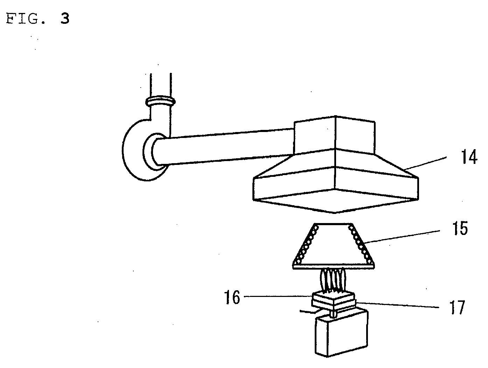

A planar square-shaped test piece 100 mm on a side was cut out, and as illustrated in FIG. 3, the test piece was burnt by being irradiated with heat rays having an energy density of 50 kW/m² for 10 minutes according to a method in conformity with ISO 5660-1:2002 through the use of a cone calorimeter. In FIG. 3, reference numeral 14 represents an exhaust hood, reference numeral 15 represents a cone-type heater, reference numeral 16 represents a specimen, and reference numeral 17 represents a specimen holder. A combustion judgment is performed on the basis of a gross calorific value (MJ/m²) and a maximum heat generation rate (kW/m²) measured during a test time, and an ignition time (second(s)). The ignition time (second(s)) was determined as follows: the case where flame was present for 10 seconds or more after the observation of the flame from the test piece was regarded as the case where the test piece ignited, and a time period from the initiation of the test to the first observation of the ignition was defined as the ignition time. In addition, the presence or absence of the penetration of the flame through the test piece was visually observed.

### <Judgment Criteria>

### (1) Gross Calorific Value per 10 Minutes

⊚: The gross calorific value is less than 20 MJ/m².
○: The gross calorific value is 20 MJ/m² or more and less than 30 MJ/m².
×: The gross calorific value is 30 MJ/m² or more.

### (2) Maximum Heat Generation Rate per 10 Minutes

⊚: The maximum heat generation rate is less than 200 kW/m².
○: The maximum heat generation rate is 200 kW/m² or more and less than 300 kW/m².
×: The maximum heat generation rate is 300 kW/m² or more.

### (3) Ignition Time

○: The ignition time is 60 seconds or more.
×: The ignition time is less than 60 seconds.

### (4) Penetration

○: The penetration is absent.
×: The penetration is present.

### (Scratch Resistance)

Steel wool #0000 was uniformly attached to a smooth section of a cylinder having a diameter of 25 mm, and the resultant was pressed against the surface of a flame-retardant composite material sample under the condition of a load of 400 g. It should be noted that the cylinder having attached thereto the steel wool was reciprocated on the surface of the flame-retardant composite material sample at about 100 mm/sec 10 times. Then, after the reciprocation, whether a flaw having a width of 10 µm or more was made in the surface of the flame-retardant composite material sample was visually observed and judged in accordance with the following criteria.
○: The surface has no flaw.
Δ: The surface has a fine flaw but the flaw affects the visibility of the sample to a small extent.
×: The surface has a conspicuous flaw and the flaw impairs the visibility of the sample.

### (Total Light Transmittance)

A total light transmittance was measured with a haze meter ("HM-150" manufactured by Murakami Color Research Laboratory) in conformity with JIS 7361.

**[Table 3]**

| | Combustion test | | Cone calorimeter test | | | | Total light transmittance (%) |
|---|---|---|---|---|---|---|---|
| | Ignition and carbonization | Penetration and melt dropping | Gross calorific value | Maximum heat generation rate | Ignition time | Penetration | |
| Example 1 | ○ | ○ | ⊚ | ⊚ | ○ | ○ | 52.1 |
| Example 2 | ○ | ○ | ⊚ | ⊚ | ○ | ○ | 51.8 |
| Example 3 | ○ | ○ | ⊚ | ⊚ | ○ | ○ | 52.2 |
| Example 4 | ○ | ○ | ⊚ | ⊚ | ○ | ○ | 51.2 |
| Example 5 | ○ | ○ | ⊚ | ⊚ | ○ | ○ | 53.4 |
| Example 6 | ○ | ○ | ⊚ | ⊚ | ○ | ○ | 51.5 |
| Example 7 | ○ | ○ | ⊚ | ⊚ | ○ | ○ | 52.3 |
| Example 8 | ○ | ○ | ⊚ | ⊚ | ○ | ○ | 65.4 |
| Example 9 | ○ | ○ | ⊚ | ⊚ | ○ | ○ | - |
| Example 10 | ○ | ○ | ⊚ | ⊚ | ○ | ○ | - |
| Example 11 | ○ | ○ | ⊚ | ⊚ | ○ | ○ | - |
| Example 12 | ○ | ○ | ⊚ | ⊚ | ○ | ○ | - |
| Example 13 | ○ | ○ | ⊚ | ⊚ | ○ | ○ | - |
| Example 14 | ○ | ○ | ⊚ | ⊚ | ○ | ○ | - |

**[Table 4]**

| | Combustion test | | Cone calorimeter test | | | |
|---|---|---|---|---|---|---|
| | Ignition and carbonization | Penetration and melt dropping | Gross calorific value | Maximum heat generation rate | Ignition time | Penetration |
| Example 15 | ○ | ○ | ⊚ | ⊚ | ○ | ○ |
| Example 16 | ○ | ○ | ⊚ | ⊚ | ○ | ○ |
| Example 17 | ○ | ○ | ⊚ | ⊚ | ○ | ○ |
| Example 18 | ○ | ○ | ⊚ | ⊚ | ○ | ○ |
| Example 19 | ○ | ○ | ⊚ | ⊚ | ○ | ○ |
| Example 20 | ○ | ○ | ⊚ | ⊚ | ○ | ○ |
| Example 21 | ○ | ○ | ○ | ○ | ○ | ○ |
| Example 22 | ○ | ○ | ○ | ○ | ○ | ○ |
| Example 23 | ○ | ○ | ○ | ○ | ○ | ○ |
| Example 24 | ○ | ○ | ○ | ○ | ○ | ○ |
| Example 25 | ○ | ○ | ○ | ○ | ○ | ○ |
| Example 26 | ○ | ○ | ○ | ○ | ○ | ○ |
| Example 27 | ○ | ○ | ⊚ | ⊚ | ○ | ○ |
| Example 28 | ○ | ○ | ⊚ | ⊚ | ○ | ○ |
| Example 29 | ○ | ○ | ⊚ | ⊚ | ○ | ○ |
| Example 30 | ○ | ○ | ⊚ | ⊚ | ○ | ○ |
| Example 31 | ○ | ○ | ⊚ | ⊚ | ○ | ○ |
| Example 32 | ○ | ○ | ⊚ | ⊚ | ○ | ○ |

**[Table 5]**

| | Combustion test | | Cone calorimeter test | | | | Scratch resistance |
|---|---|---|---|---|---|---|---|
| | Ignition and carbonization | Penetration and melt dropping | Gross calorific value | Maximum heat generation rate | Ignition time | Penetration | |
| Example 33 | ○ | ○ | ⊚ | ⊚ | ○ | ○ | - |
| Example 34 | ○ | ○ | ⊚ | ⊚ | ○ | ○ | - |
| Example 35 | ○ | ○ | ⊚ | ⊚ | ○ | ○ | - |
| Example 36 | ○ | ○ | ⊚ | ⊚ | ○ | ○ | - |
| Example 37 | ○ | ○ | ⊚ | ⊚ | ○ | ○ | - |
| Example 38 | ○ | ○ | ⊚ | ⊚ | ○ | ○ | - |
| Example 39 | ○ | ○ | ⊚ | ⊚ | ○ | ○ | - |
| Example 40 | ○ | ○ | ⊚ | ⊚ | ○ | ○ | - |
| Example 41 | ○ | ○ | ⊚ | ⊚ | ○ | ○ | - |
| Example 42 | ○ | ○ | ⊚ | ⊚ | ○ | ○ | - |
| Example 43 | ○ | ○ | ⊚ | ⊚ | ○ | ○ | - |
| Example 44 | ○ | ○ | ⊚ | ⊚ | ○ | ○ | - |
| Example 45 | ○ | ○ | ⊚ | ⊚ | ○ | ○ | - |
| Example 46 | ○ | ○ | ⊚ | ⊚ | ○ | ○ | - |
| Example 47 | ○ | ○ | ⊚ | ⊚ | ○ | ○ | - |
| Example 48 | ○ | ○ | ⊚ | ⊚ | ○ | ○ | - |
| Example 49 | ○ | ○ | ⊚ | ⊚ | ○ | ○ | - |
| Example 50 | ○ | ○ | ⊚ | ⊚ | ○ | ○ | - |
| Example 51 | ○ | ○ | ⊚ | ⊚ | ○ | ○ | × |
| Example 52 | ○ | ○ | ⊚ | ⊚ | ○ | ○ | × |
| Example 53 | ○ | ○ | ⊚ | ⊚ | ○ | ○ | × |
| Example 54 | ○ | ○ | ⊚ | ⊚ | ○ | ○ | × |
| Example 55 | ○ | ○ | ⊚ | ⊚ | ○ | ○ | × |
| Example 56 | ○ | ○ | ⊚ | ⊚ | ○ | ○ | × |

**[Table 6]**

| | Combustion test | | Cone calorimeter test | | | | Scratch resistance |
|---|---|---|---|---|---|---|---|
| | Ignition and carbonization | Penetration and melt dropping | Gross calorific value | Maximum heat generation rate | Ignition time | Penetration | |
| Example 57 | ○ | ○ | ⊚ | ⊚ | ○ | ○ | - |
| Example 58 | ○ | ○ | ⊚ | ⊚ | ○ | ○ | - |
| Example 59 | ○ | ○ | ⊚ | ⊚ | ○ | ○ | - |
| Example 60 | ○ | ○ | ⊚ | ⊚ | ○ | ○ | - |
| Example 61 | ○ | ○ | ⊚ | ⊚ | ○ | ○ | - |
| Example 62 | ○ | ○ | ⊚ | ⊚ | ○ | ○ | - |
| Example 63 | ○ | ○ | ⊚ | ⊚ | ○ | ○ | ○ |
| Example 64 | ○ | ○ | ⊚ | ⊚ | ○ | ○ | ○ |
| Example 65 | ○ | ○ | ⊚ | ⊚ | ○ | ○ | ○ |
| Example 66 | ○ | ○ | ⊚ | ⊚ | ○ | ○ | ○ |
| Example 67 | ○ | ○ | ⊚ | ⊚ | ○ | ○ | ○ |
| Example 68 | ○ | ○ | ⊚ | ⊚ | ○ | ○ | ○ |
| Example 69 | ○ | ○ | ⊚ | ⊚ | ○ | ○ | ○ |
| Example 70 | ○ | ○ | ⊚ | ⊚ | ○ | ○ | ○ |
| Example 71 | ○ | ○ | ⊚ | ⊚ | ○ | ○ | ○ |
| Example 72 | ○ | ○ | ⊚ | ⊚ | ○ | ○ | ○ |
| Example 73 | ○ | ○ | ⊚ | ⊚ | ○ | ○ | ○ |
| Example 74 | ○ | ○ | ⊚ | ⊚ | ○ | ○ | ○ |
| Example 75 | ○ | ○ | ⊚ | ⊚ | ○ | ○ | ○ |
| Example 76 | ○ | ○ | ⊚ | ⊚ | ○ | ○ | ○ |
| Example 77 | ○ | ○ | ⊚ | ⊚ | ○ | ○ | ○ |
| Example 78 | ○ | ○ | ⊚ | ⊚ | ○ | ○ | ○ |
| Example 79 | ○ | ○ | ⊚ | ⊚ | ○ | ○ | ○ |
| Example 80 | ○ | ○ | ⊚ | ⊚ | ○ | ○ | ○ |

**[Table 7]**

| | Combustion test | | Cone calorimeter test | | | |
|---|---|---|---|---|---|---|
| | Ignition and carbonization | Penetration and melt dropping | Gross calorific value | Maximum heat generation rate | Ignition time | Penetration |
| Example 81 | ○ | ○ | ⊚ | ⊚ | ○ | ○ |
| Example 82 | ○ | ○ | ⊚ | ⊚ | ○ | ○ |
| Example 83 | ○ | ○ | ⊚ | ⊚ | ○ | ○ |
| Example 84 | ○ | ○ | ⊚ | ⊚ | ○ | ○ |
| Comparative Example 1 | × | ○ | × | × | × | ○ |
| Comparative Example 2 | × | ○ | × | × | × | ○ |

### Industrial Applicability

The flame-retardant composite material of the present invention is useful as a lighting apparatus, in particular, a lighting apparatus to be used in an application where non-carbonizability is required such as a railway rolling stock application because the material shows extremely high flame retardancy despite including a combustible base material.

### Reference Signs List

- **1**: base material
- **2**: coating film (coating layer)
- **3**: flame-retardant composite material
- **11**: specimen
- **12**: alcohol container (fuel container)
- **13**: container holder
- **14**: exhaust hood
- **15**: cone-type heater
- **16**: specimen
- **17**: specimen holder

## Claims

1. A flame-retardant composite material, comprising, on at least one surface of a plastic-based base material containing an inorganic compound, a coating film formed of a silicone resin composition (C) containing at least an inorganic oxide particle-containing condensation-reactive silicone resin.

2. The flame-retardant composite material according to claim 1, wherein the inorganic compound comprises an inorganic filler.

3. The flame-retardant composite material according to claim 2, wherein the inorganic filler comprises a glass fiber.

4. The flame-retardant composite material according to any one of claims 1 to 3, wherein the plastic-based base material contains polycarbonate.

5. The flame-retardant composite material according to any one of claims 1 to 4, wherein the inorganic oxide particle-containing condensation-reactive silicone resin comprises a condensation-reactive silicone resin (A) formed of a cross-linked structural body in which inorganic oxide particles dispersed in a polysiloxane resin having a condensation-reactive group and the polysiloxane resin are cross-linked by a chemical bond.

6. The flame-retardant composite material according to claim 5, wherein in the condensation-reactive silicone resin (A), the polysiloxane resin having a condensation-reactive group contains any one of (i) a condensation-reactive group-containing polysilsesquioxane containing a T unit as a basic constituent unit, (ii) a condensation-reactive group-containing polysiloxane containing a D unit and a T unit as basic constituent units, and (iii) a combination of the condensation-reactive group-containing polysilsesquioxane containing a T unit as a basic constituent unit, and the condensation-reactive group-containing polysiloxane containing a D unit and a T unit as basic constituent units.

7. The flame-retardant composite material according to claim 6, wherein the polysiloxane resin having a condensation-reactive group further contains a polysiloxane resin having a silanol group except the (i), (ii), and (iii).

8. The flame-retardant composite material according to any one of claims 1 to 7, wherein the silicone resin composition (C) contains: a condensation-reactive silicone resin (A) formed of a cross-linked structural body in which inorganic oxide particles dispersed in a polysiloxane resin having a condensation-reactive group and the polysiloxane resin are cross-linked by a chemical bond; and inorganic particles (B).

9. The flame-retardant composite material according to claim 8, wherein the inorganic particles (B) comprise at least one kind selected from glass frits, silica particles, alumina particles, aluminum hydroxide particles, magnesium hydroxide particles, tin oxide particles, and clay mineral particles.

10. The flame-retardant composite material according to claim 9, wherein the glass frits serving as the inorganic particles (B) each have a yield point of 300°C or more and 700°C or less.

11. The flame-retardant composite material according to claim 9 or 10, wherein the glass frits serving as the inorganic particles (B) are each formed of at least one kind of component selected from silicic acid, boric acid, borosilicic acid, aluminum oxide, calcium oxide, sodium oxide, lithium oxide, and phosphorus oxide.

12. The flame-retardant composite material according to claim 11, wherein the glass frits serving as the inorganic particles (B) are each formed of a component containing at least phosphorus oxide.

13. The flame-retardant composite material according to any one of claims 9 to 12, wherein the glass frits serving as the inorganic particles (B) have an average particle diameter of from 0.1 µm to 1,000 µm.

14. The flame-retardant composite material according to any one of claims 8 to 13, wherein a content of the inorganic particles (B) is from 0.1 part by weight to 500 parts by weight with respect to 100 parts by weight of the condensation-reactive silicone resin (A).

15. The flame-retardant composite material according to any one of claims 1 to 14, wherein the plastic-based base material has a sheet shape or a plate shape.

16. The flame-retardant composite material according to any one of claims 1 to 15, wherein the flame-retardant composite material has a thickness of from 50 µm to 6,000 µm.

17. The flame-retardant composite material according to any one of claims 1 to 16, wherein the coating film formed of the silicone resin composition (C) has a thickness of from 5 µm to 1,000 µm.

18. The flame-retardant composite material according to any one of claims 1 to 17, wherein the flame-retardant composite material has such a characteristic as to be free from igniting and carbonizing in a combustion test of a railway rolling stock material combustion test.

19. The flame-retardant composite material according to any one of claims 1 to 18, wherein the flame-retardant composite material has incombustibility in a combustion test of a railway rolling stock material combustion test.

20. The flame-retardant composite material according to any one of claims 1 to 19, wherein the flame-retardant composite material has a gross calorific value per 10 minutes of 30 MJ/m² or less, a maximum heat generation rate of 300 kW/m² or less, and an ignition time of 60 seconds or more in a cone calorimeter test of a railway rolling stock material combustion test.

21. The flame-retardant composite material according to any one of claims 1 to 20, wherein the flame-retardant composite material is used as a transporting machine interior material, a building material, a display material, a home appliance material, or an electronic circuit material.

22. The flame-retardant composite material according to claim 21, wherein the transporting machine interior material comprises a lighting cover.

23. A lighting apparatus using the flame-retardant composite material of any one of claims 1 to 22, comprising at least:
a light source for generating light to be used in lighting; and
a lighting cover arranged to cover the light source and including the flame-retardant composite material,
wherein the light from the light source is transmitted by the flame-retardant composite material to be output.
